(19) Europäisches Patentamt
European Patent Office
Office européen des brevets

(11) **EP 2 970 553 B1**

(12) **EUROPEAN PATENT SPECIFICATION**

(45) Date of publication and mention
of the grant of the patent:
**06.03.2019 Bulletin 2019/10**

(51) Int Cl.:
**C08G 18/28** *(2006.01)*      **C08G 18/63** *(2006.01)*
**C08G 18/06** *(2006.01)*      **C08J 9/04** *(2006.01)*
**C08G 101/00** *(2006.01)*

(21) Application number: **14776520.0**

(22) Date of filing: **07.03.2014**

(86) International application number:
**PCT/US2014/021704**

(87) International publication number:
**WO 2014/159048 (02.10.2014 Gazette 2014/40)**

(54) **NOVEL POLYMER POLYOLS BASED ON NATURAL OILS POLYOLS**

NEUARTIGE POLYMERPOLYOLE AUF BASIS VON POLYOLEN AUS NATÜRLICHEN ÖLEN

POLYOLS POLYMÈRES D'UN NOUVEAU TYPE À BASE DE POLYOLS D'HUILES NATURELLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.03.2013 US 201313826911**

(43) Date of publication of application:
**20.01.2016 Bulletin 2016/03**

(73) Proprietor: **Covestro LLC
Pittsburgh, PA 15205 (US)**

(72) Inventors:
• **ADKINS, Rick, I.
Canonsburg, PA 15317 (US)**

• **ENGLAND, Jiong
Orange, CA 92865 (US)**
• **WARDIUS, Don, S.
Pittsburgh, PA 15228 (US)**

(74) Representative: **Levpat
c/o Covestro AG
Gebäude 4825
51365 Leverkusen (DE)**

(56) References cited:
**US-A1- 2006 025 491      US-A1- 2008 262 259
US-A1- 2009 170 972      US-A1- 2010 099 788
US-A1- 2012 041 144      US-A1- 2012 041 144
US-B2- 7 456 229**

**Description**

BACKGROUND OF THE INVENTION

Polymer polyols are graft polymers made by the dispersion polymerization of one or more vinyl monomers fed into a liquid phase consisting of a polyether or polyester polyol, the latter most commonly consisting of an oligomeric low polymer of propylene oxide and ethylene oxide. Such polymer polyols are generally useful in the polyurethane industry, in particular for the purposes of formulating polyurethane foams, or other polyurethane products such as adhesives, sealants, and elastomers.

This invention relates to novel polymer polyols and to a process for preparing these stable, low-viscosity polymer polyols. These polymer polyols are characterized as having a solids content of at least 30% by weight, and an overall hydroxyl number of the base polyol of at least 190. They comprise (a) a base polyol component that comprises a natural oil polyol having a mean hydroxyl functionality of 1.7 to 5.0, a number average molecular weight of about 350 to about 725, and an OH number of 190 to 500, and (b) a graft polymer which results from a vinyl polymerization process which occurs in-situ, and which is stabilized as a colloid by a preformed stabilizer. Typically the dispersed solids are comprised of styrene-acrylonitrile copolymer.

Concerning the base polyol component, the development of polyols based on rapidly renewable nature-derived raw materials, including fatty acid triglycerides such as vegetable oils, sugar, sorbitol, and glycerol, are already used in diverse ways including as raw materials in the preparation of polyurethane materials. Furthermore, the chemistry and processes to utilize vegetable oils and other triglycerides or even fatty acid esters to make polyols and polyurethanes has been covered recently in the literature by two independent reviews. (Desroches, et al. "From Vegetable Oils to Polyurethanes: Synthetic Routes to Polyols and Main Industrial Products" in Polymer Reviews, 2012, 52, pp. 38-79; and Pfister, et al., "Recent Advances in Vegetable Oil based Polyurethanes" in ChemSusChem, 2011, 4, pp. 703-717.) From these reviews it is clear that there are several different and versatile routes that have been investigated for the purpose of incorporating rapidly renewable nature-derived raw materials into polyols and polyurethanes.

Even more broadly than polyurethanes, reacting glycerol or monosaccharides such as sucrose or sorbitol with fatty acid di or triglycerides, or in some cases with a fatty acid methyl ester is well known in the art and has been carried out to support many various applications. For example, Osipow et al. "Methods of Preparation ... Fatty Acid Esters of Sucrose" in Ind. Eng. Chem., 1956, 48(9), pp. 1459-1462, discusses the history and methods of preparation of certain fatty acid esters of sucrose, including sucrose monoesters and sucrose diesters. Related articles by the same authors report on the physical properties of these esters prepared with various fatty acids, including their characterization as possible surfactants suitable for use as emulsifiers and detergents. (Osipow, et al. "Surface Activity of Monoesters ... Fatty Acid Esters of Sucrose" in Ind. Eng. Chem., 1956, 48(9), pp. 1462-1464).

Reaction products of tallow and sucrose have been used as adjuvants for the formulation of agricultural sprays according to Berne-Allen (1965) ("Tallow Derived Surfactants: Superior Adjuvants for Agricultural Sprays" in Fette-Seifen-Anstrichmittel, 1965, 67(7) pp. 509-511). In particular, a glyceride sugar tallowate was found to be suitable and was recommended for a field application trial.

More recently there has been considerable effort to prepare low calorific value synthetic fat substitutes for alimentary uses. These are more involved since they are prepared by reacting hydroxyl-containing compounds such as glycerine or sucrose with an oxirane such as propylene oxide, and then esterifying with fatty acids to form an "esterified alkoxylated polyol" according to U.S. Patents 5,288,884 and 5,298,637, and European Patent Application 619291 A1 (1994). These procedures are seen to be lengthy and labor intensive to make the desired esterified alkoxylated polyol. Also, U.S. Published Patent Application 20020058774 A1 has disclosed the transesterification of soybean oil and sorbitol for the purpose of preparing a natural oil polyol which is useful for the preparation of various types of polyurethane foams.

The existing art does not disclose the graft polymerization of vinyl monomers in base polyols made from the alkoxylation of hydroxyl-containing compounds such as sucrose, glycerin, sorbitol, or alkoxylated starters made from them, and the like which have been at the same time transesterified with fatty acid di- or tri-glycerides. The graft polymerization step is particularly difficult to carry out when the polyol medium is the natural oil polyol of the invention. The amount of grafting between the polyol medium and the vinyl polymer is very sensitive to the monomer ratio, much more so than in typical PMPOs. It requires careful choice of reaction conditions and free radical polymerization initiator and stabilizer type and concentrations to successfully produce a homogeneous and phase stable PMPO product when the NOP is employed as compared to the conventional polyether polyol.

Generally speaking the use of renewable components to make polyols and polyurethane chemicals will increase further in the future, because products made from renewable sources are rated advantageously in ecological product burden calculations, sometimes called "ecobalances," and life cycle inventory analyses, and the availability of petrochemical or fossil-based raw materials are likely to decline and their costs are likely to rise significantly in the long term.

An increased use of sugar, glycerol and sorbitol as well as other mono- or oligosaccharides as the polyol component in polyurethane formulations can be complicated by their low solubility in or high incompatibility with other polyether or polyester polyols employed in the polyurethane formulation, especially in the case of sucrose, for example. Another problem is that these substances tend to impart adversely high OH numbers to the polyol blend component, even when employed in low amounts, because of their high density of hydroxyl groups. These factors make it very impractical to use natural compounds such as sucrose or glycerine in any significant amount in most polyurethane formulations.

Natural oils or fatty acid triglycerides may be readily obtained in large quantities from regenerable sources and therefore form an inexpensive basis for polyurethane raw materials. In rigid foam formulations specifically, this class of compound is distinguished by a high dissolving capacity for many physical blowing agents, e.g., typically those based on hydrocarbons such as the various isomers of pentane. A disadvantage is that only few fatty acid triglycerides have the reactive hydrogen atoms necessary for the reaction with isocyanates. Exceptions are castor oil and lesquerella oil, which is uncommon in trade. Even the availability of castor oil is limited, and its price is often relatively high due to its large scale cultivation only in certain parts of the globe, mostly India, China and Brazil, and its broad range of established uses in other industrial applications.

A further problem with the use of natural oils themselves in foam formulations is their incompatibility with many other polyol components, in particular with most polyether polyols. A number of solutions to these problems have been proposed.

These solutions include the use of double metal cyanide catalysts in the preparation of alkylene oxide adducts based on starter components from regenerable sources with the goal of rendering these accessible to polyurethane chemistry as described in DE-A 33 23 880 and WO 2004/20497. Compatibilizers for blowing agents based on hydrocarbons are obtained by addition of alkylene oxide onto hydroxylated triglycerides, that is, natural oils in which the alkene type of unsaturation groups have been reacted with an hydroperoxide moity to add an hydroxyl group to the triglyceride molecule. DE 101 38 132 discloses OH adducts of castor oil or hydroxylated fatty acid compounds and alkylene oxides as hydrophobizing components in flexible polyurethane systems.

Various patents including U.S. Patents 6,686,435, 6,548,609, 6,107,433 and 2,752,376 disclose ring opening of epoxidized fatty acid derivatives and their use in polyurethane systems. Also see EP-A 259 722, DE-A 36 30 264, WO 91/05759.

A process for the hydroxylation and hydroxymethylation of unsaturated fatty acid esters, and further reaction thereof by transesterification to form branched condensates, and their use in polyurethane systems is disclosed in WO 2004/96744, WO 2004/96882 and WO 2004/096883.

Transesterification products of hydrophobic components (triglycerides, phthalic acid derivatives and polyols) as the OH component in form formulations which use alkane blowing agents are disclosed in U.S. Patent 6,359,022. Esterification or transesterification products of fatty acids derivatives are also described in EP-A 905 158 and EP-A 610 714. Hydrophobically modified oligosaccharides prepared by esterification with fatty acids are described in WO 200640333 and WO 200640335.

DE-A 198 12 174 discloses the reaction of transesterification products of polyfunctional alcohols and triglycerides with alkylene oxides and the transesterification of prefabricated polyether polyols with triglycerides in a two-stage process. Furthermore, U.S. Published Patent Application 2008/0114086 provides novel polyether-ester polyols which are based on regenerable raw materials that are suitable for polyurethane chemistry.

Polymer polyols which contain a natural oil component are described in U.S. Patent 5,854,358. In particular, these are prepared by polymerization of monomers in the presence of a polyol and a castor oil-polyol product. These castor oil-polyol products are hydroxyl compounds modified with castor oil and have molecular weights of 6000 to 100,000 and functionalities of 2 to 6. These polymer polyols are not suitable for the formulation of rigid and semi-rigid foams, however, due to their low hydroxyl numbers.

WO 2006/065345 discloses polymer polyols prepared from vegetable-oil based hydroxyl-containing materials. The continuous phase of these polymer polyols includes at least one hydroxymethyl-containing polyester polyol which is derived by hydroformylating and hydrogenating a fatty acid or a fatty acid ester. Such processing steps are relatively expensive, requiring capital-intensive processes employing transition metals such as rhodium in the necessary homogeneous catalysis of the hydroformylation. The present invention does not require exotic catalysis nor processes which are as capital-intensive.

The polymer polyols of US 2010/0160469 comprise the free-radical polymerization product of at least one ethylenically unsaturated monomer and a base polyol in the presence of a free radical initiator and, optionally a chain transfer agent. Suitable base polyols are selected from (a) natural oils which naturally contain at least one hydroxyl group, (b) hydroxylated derivatives of a natural oil, (c) polyols comprising the alkoxylation product of a natural oil which naturally contains a hydroxyl group with one or more alkylene oxides, (d) polyols comprising the alkoxylation product of a hydroxylated derivative of a natural oil with one or more alkylene oxides, and (e) mixtures thereof. These polymer polyols are not made on base polyols of this invention which does not require any of the fatty acid chains contained to either be of the relatively rare type which contain naturally occurring hydroxyl groups or else to be hydroxylated with additional and relatively expensive processing steps.

U.S. Patent 7,456,229 discloses a process for producing rigid and semi-rigid foams comprising the reacting a polyisocyanate with an isocyanate-reactive component in which the isocyanate-reactive component comprises a polymer polyol characterized by a high solids content and a high hydroxyl number. Although this reference discloses that polyols prepared from natural oils such as, for example, castor oil, oxidized soybean oil, etc. may be suitable for the base polyol of the polymer polyol therein, these should be distinguished from the process of the current invention by which plentiful and inexpensive triglycerides with no free hydroxyl groups may be readily employed with alkoxylated or non-alkoxylated saccharides or oligosaccharides or glycerol or polyglycerols, or any mixture thereof to form a base polyol which then by virtue of the mol ratios of the reactants selected possesses hydroxyl groups and provides a suitable base polyol from which a polymer polyol may be made in a further step. Moreover, all of the examples of U.S. Patent 7,456,229 use conventional base polyols started from glycerin or propylene glycol which is subsequently subjected to the addition of the alkylene oxides EO and PO, rather than natural oil polyols.

THE US Patent application US 2012/00411441 A1 discloses low viscosity polymer polyols which have a high hydroxyl number. These polymer polyols comprise the free-radical polymerization product of (A) a base polyol having a hydroxyl number of from 60 to 1900, a functionality of about 1 to 10, and an equivalent weight of about 30 to 900, (B) a pre-formed stabilizer and (C) at least one ethylenically unsaturated monomer, in the presence of (D) at least one free-radical polymerization initiator, and (E) at least one polymer control agent. These low viscosity polymer polyols are characterized by an OH number $\geq 20$, viscosities that are less than or equal to be[2.7c] wherein b is the viscosity of the base polyol and c is [% solids/(100 - % solids)], and have a solids content of about 30% to about 65% by weight.

## SUMMARY OF THE INVENTION

This invention relates to stable, low-viscosity polymer polyols and to a process for the preparation of these polymer polyols. The novel polymer polyols herein comprise the free-radical polymerization product of:

(a) a clear liquid base polyol component comprising a natural oil base polyol having a mean hydroxyl functionality of 1.7 to 5.0, a number average molecular weight of about 350 to about 725 and an OH number of 190 to 500, and which comprises the transesterification/alkoxylation product of

(i) at least one initiator comprising at least one Zerewitinoff-active hydrogen atom,
(ii) a natural oil component or a mixture of natural oil components,
and
(iii) at least one alkylene oxide,
in the presence of
(iv) at least one alkaline catalyst (preferably KOH, most preferably KOH in VGSM);

wherein said alkylene oxide is completely reacted;
(b) at least one ethylenically unsaturated monomer;
and, optionally,
(c) a preformed stabilizer;
in the presence of:
(d) a free-radical polymerization initiator;
and, optionally,
(e) a chain transfer agent.

The process for preparing these stable, low-viscosity polymer polyols comprising:

(1) free-radically polymerizing:

(a) a clear liquid base polyol component comprising a natural oil base polyol having a functionality of 1.7 to 5.0, a molecular weight of about 350 to about 725 and an OH number of 190 to 500, and which comprises the transesterification/alkoxylation product of

(i) at least one initiator comprising at least one Zerewitinoff-active hydrogen atom;
(ii) a natural oil component or a mixture of natural oil components,
and
(iii) at least one alkylene oxide,
in the presence of
(iv) at least one alkaline catalyst (preferably KOH, most preferably KOH in VGSM);

wherein said alkylene oxide is complete reacted;
(b) at least one ethylenically unsaturated monomer;
and, optionally,
(c) a preformed stabilizer;
in the presence of:
(d) a free-radical polymerization initiator;
and, optionally,
(e) a chain transfer agent.

DETAILED DESCRIPTION OF THE INVENTION

The present invention will now be described for purposes of illustration. Except in the operating examples, or where otherwise indicated, all numbers expressing quantities, percentages, OH numbers, functionalities, and so forth in the specification are to be understood as being modified by the term "about'. Any combination of upper and lower limits of all ranges disclosed herein may be used in accordance with the present invention, unless otherwise stated.

The following terms shall have the following meanings.

As used herein, the hydroxyl number is defined as the number of milligrams of potassium hydroxide required for the complete hydrolysis of the fully phthalylated derivative prepared from 1 gram of polyol. The hydroxyl number can also be defined by the equation:

$$OH = (56.1 \times 1000)/Eq. \ Wt.$$

wherein:

OH:  represents the hydroxyl number of the polyol, Eq. Wt. represents the average equivalent weight of the polyol.

As used herein, the functionality of the polyol represents the average functionality of the polyol, i.e. the average number of hydroxyl groups per molecule.

As used herein, the term molecular weight refers to the number average molecular weight unless indicated otherwise.

The term "natural oil" is defined as a starting material that is not derived from petroleum but as a starting material derived from a plant including the fruits, nuts and/or seeds of plants, any other naturally occurring vegetable oil, animal fats and/or oils, or any other non-petroleum, non-fossil derived oil. These naturally derived materials utilize "fresh carbon," that is, carbon which has been "fixed" or incorporated into plant matter from the atmosphere by the process of photosynthesis within at least the past 100 years, usually within the past 10 years, and often within the past one year. Furthermore they are environmentally friendly and biologically based materials. Thus, these starting materials are also frequently called "bio-based", "renewable," "regenerable," or "natural oil" materials.

Polyols, including base polyols, prepared from these various non-petroleum sources as identified above are frequently referred to as "renewable resource based polyols", "bio-based polyols", "biopolyols" and/or "natural oil polyols". While some renewable resource materials, such as castor oil, contain naturally occurring hydroxyl groups, most natural oils must be converted to the hydroxyl containing polyols by chemical processes such as hydroxylation, epoxidation, ozonolysis, hydroformylation/hydrogenation or other suitable processes.

The term "ethylenically unsaturated monomer" means the simple unpolymerized form of a chemical compound having relatively low molecular weight, e.g., acrylonitrile, styrene, methyl methacrylate, and the like.

The phrase "free radically polymerizable ethylenically unsaturated monomer" means a monomer containing ethylenic unsaturation ($>C = C<$, i.e. two double bonded carbon atoms) that is capable of undergoing free radically induced addition polymerization reactions.

The term pre-formed stabilizer is defined as an intermediate obtained by reacting a macromer containing reactive unsaturation (e.g. acrylate, methacrylate, maleate, etc.) with monomers (i.e. acrylonitrile, styrene, methyl methacrylate, etc.), optionally, in a polymer control agent, PCA, (i.e. methanol, isopropanol, toluene, ethylbenzene, etc.) and/or optionally, in a polyol, to give a co-polymer (dispersion having e.g. a low solids content (e.g. <20%), or soluble grafts, etc.).

The term "stability" means the ability of a material to maintain a stable form such as the ability to stay in solution or in suspension.

The phrase "polymer polyol" refers to such compositions which can be produced by polymerizing one or more ethylenically unsaturated monomers dissolved or dispersed in a polyol in the presence of a free radical catalyst to form a stable dispersion of polymer particles in the polyol. These polymer polyols have the valuable property of imparting to, for example, polyurethane foams and elastomers produced therefrom, higher load-bearing properties than are provided by the corresponding unmodified polyols.

As used herein "viscosity" of a fluid refers to that property which would be more precisely called the "kinematic viscosity," which is itself is defined as the viscosity divided by the density of the fluid. In fluid mechanics the viscosity is that proportionality between the shearing stress exerted across an area and the velocity gradient when that gradient is normal to the area. The viscosity as used here is reported in units of "centistokes (cSt) measured at 25°C," and typically this would be carried out on a Cannon Fenske, or other suitable viscometer.

As used herein, the term "VGSM" refers to vacuum glycerin start medium. More specifically, VGSM refers to glycerin as the initiator for the liquid polyether polyol component wherein the glycerin is used as the sole initiator or glycerin may be used as the initiator in combination with another low molecular weight initiator. In accordance with the present invention, when using VGSM, the start medium will typically also contain one or more alkaline catalyst such that this start medium may also provide the catalyst necessary for the reaction.

The base polyols suitable for the present invention are clear liquid polyether polyols that comprise a natural oil base polyol, have a mean hydroxyl functionality of 1.7 to 5.0 (preferably 2.4 to 4.4), a number average molecular weight of about 350 to about 725 (preferably 400 to 600), and an OH number of 190 to 500 (preferably 300 to 400). The clear liquid polyether polyols which are suitable as base polyols herein may be described as renewable or regenerable content polyether polyols.

These renewable or regenerable content polyether polyols comprise the transesterification/alkoxylation product of (i) at least one initiator which has Zerewitinoff active hydrogen atoms that may comprise, for example, a hydroxyl group containing compound, an amine group containing compound, any mixtures thereof, or alkoxylates thereof; (ii) a natural oil component, and (iii) at least one alkylene oxide, in the presence of (iv) at least one alkaline catalyst. Suitable alkaline catalysts for preparing the renewable or regenerable content polyether polyols include, for example, sodium hydroxide, potassium hydroxide, sodium or potassium methoxide, sodium stearate, calcium oxide, and N-methyl imidazole. Potassium hydroxide is a preferred alkaline catalyst.

In one embodiment of the present invention in which the alkaline catalyst comprises potassium hydroxide, the potassium hydroxide is present in a vacuum glycerin start medium (VGSM). In this embodiment, the alkaline catalyst is thus added to the reaction by means of the vacuum glycerin start medium. This embodiment of the invention additionally comprises glycerin as an initiator.

A simple one-pot one-step process for preparing suitable base polyols was previously discovered, and is disclosed in U.S. Published Patent Application 20080114086, the disclosure of which is herein incorporated by reference in its entirety. This process enables the preparation of polyether polyols which are suitable as base polyols in polymer polyols. These base polyether polyols can be obtained by reacting (i) at least one initiator comprising at least one Zerewitinoff active hydrogen atom, (ii) at least one natural oil component, and (iii) at least one alkylene oxide, under alkaline catalysis, to yield the base polyether polyols. As set forth above, the initiators (i) comprise at least one Zerewitinoff active hydrogen atom which may comprise, for example, hydroxyl group containing compounds, amine group containing compounds, any mixtures thereof, or alkoxylates thereof.

These low molecular weight base polyether polyols have an unusual combination of properties. More specifically, these low molecular weight polyether polyols have a high density of OH groups and triglycerides, and the compatibility or miscibility of the two classes of substance with one another and with conventional base polyether polyols is improved.

The process used to prepare these low molecular weight base polyols ensures that the natural oil component are incorporated completely into the polyether polyols formed. The resultant liquid polyether polyols have OH numbers in the range of from 190 to 500 mg KOH/g.

Suitable starter compounds or initiators comprise at least one Zerewitinoff-active hydrogen atom. The at least one Zerewitinoff-active hydrogen atom of these initiators may be the hydrogen atom of an amine group or the hydrogen atom of a hydroxyl group. Suitable initiators which comprise hydroxyl group containing compounds usually have functionalities of from 1.7 to 8, but in certain cases also functionalities of up to 35. Their molar masses may range from 60 g/mol to 1,200 g/mol. In addition to hydroxy-functional initiator compounds, amine group containing compounds may also be employed as initiators. Preferred starter compounds have functionalities of greater than or equal to 3. Examples of hydroxyl-group containing initiator compounds are propylene glycol, ethylene glycol, glycerin, diethylene glycol, dipropylene glycol, 1,2-butanediol, 1,3-butanediol, 1,4-butanediol, 2,3-butanediol, hexanediol, pentanediol, 3-methyl-1,5-pentanediol, triethylene glycol, tripropylene glycol, 1,2-cyclohexanediol, 1,12-dodecanediol, glycerol, trimethylolpropane, trimethylolethane, 1,2,6-trihydroxyhexane, 2,3,4-trihydroxypentane, triethanolamine, pentaerythritol, sorbitol, sucrose, α-methyl glucoside, fructose, hydroquinone, pyrocatechol, resorcinol, bisphenol F, bisphenol A, 1,3,5-trihydroxybenzene, condensates of formaldehyde and phenol or melamine or urea containing methylol groups, and Mannich bases. Highly functional starter compounds based on hydrogenated starch hydrolysis products can also be employed. Such compounds are described, for example, in U.S. Patent 6,710,096, the disclosure of which is hereby incorporated by reference. Examples of suitable initiator compounds containing amino groups are ammonia, ethanolamine, diethanolamine, isopropanol-amine, diisopropanolamine, ethylenediamine, hexamethylenediamine, aniline, the isomers of toluidine, the isomers of diaminotoluene, the isomers of diaminodiphenylmethane and products having a relatively high ring content obtained in the condensation of aniline with formaldehyde to give diaminodiphenylmethane. Ring-opening products from cyclic carboxylic acid anhydrides and polyols can moreover also be employed as initiator compounds. Examples are ring-opening products from phthalic anhydride, succinic anhydride and maleic anhydride on the one hand and ethylene glycol, diethylene glycol, 1,2-butanediol, 1,3-butanediol, 1,4-butanediol, 2,3-butanediol, hexanediol, pentanediol, 3-methyl-1,5-pentanediol, 1,12-dodecanediol, glycerol, trimethylolpropane, pentaerythritol or sorbitol on the other hand. Mixtures of various initiator compounds can of course also be employed.

In one embodiment, an alkoxylate of glycerin which contains sufficient potassium hydroxide content such that it can be used as a liquid medium to deliver sufficient potassium hydroxide catalyst to supply a much larger batch of polyol can be employed. An example of this would be the material called "Vacuum Glycerin Start Medium" (VGSM). VGSM can be made by alkoxylating glycerin in a suitable closed pressure reactor at temperatures ranging from 110°C to 160°C employing a low level of potassium hydroxide catalyst, e.g. 0.2%. Once a hydroxyl number such as, for example, 1020 or a similar value, has been obtained, the alkoxylation reaction is discontinued but more potassium hydroxide is added at this point in the process in order to boost the final potassium hydroxide concentration in the resulting polyol starter intermediate such that it is in the range of 0.7 to 1.0% by weight. Then the resulting mixture is carefully and thoroughly de-watered by maintaining the temperature in the range of 115°C to 130°C, and pulling vacuum while sparging with nitrogen to assist the mass transfer that removes the water vapor from the liquid polyol solution. The resulting VGSM is storage stable when stored in a nitrogen atmosphere at temperatures between 50°C and 120°C. The moisture content of the VGSM is 0.05% water or less.

In one embodiment, glycerin from vacuum glycerin start medium as described herein comprises the initiator for the liquid polyether polyol component. Glycerin may be used as the sole initiator or it may be used in combination with another initiator compound. When using vacuum glycerin start medium, the medium will typically also contain one or more alkaline catalyst such that this medium may also provide the catalyst for the reaction. In a preferred version of this embodiment, the initiator comprises glycerin from the vacuum glycerin start medium, and sucrose.

In accordance with the present invention, the source of the initiator may a vacuum start medium or the initiator may be added directly, without the aid of a start medium. It is also possible to use a combination of these; i.e. an initiator such as glycerin from a start medium (specifically from a vacuum glycerin start medium as described herein), and another initiator comprising a hydroxyl group containing compound as described above such as sucrose.

Prefabricated alkylene oxide addition products of the initiator compounds mentioned, that is to say polyether polyols having OH numbers of from 300 to 1250 mg KOH/g, can furthermore also be employed in the process, either as the sole source of hydroxyl or amine functionality, or in combination with other initiator compounds. It is also possible also to employ polyester polyols having OH numbers in the range of from 300 to 1200 mg KOH/g in the process according to the invention, alongside the starter compounds. Polyester polyols which are suitable for this can be prepared, for example, from organic dicarboxylic acids having 2 to 12 carbon atoms and polyhydric alcohols, preferably diols, having 2 to 12 carbon atoms, preferably 2 to 6 carbon atoms.

Suitable alkylene oxides are, for example, ethylene oxide, propylene oxide, 1,2-butylene oxide or 2,3-butylene oxide, 1,2-pentene oxide, methyl glycidyl ether, phenyl glycidyl ether, and styrene oxide. Preferably, propylene oxide and ethylene oxide are added to the reaction mixture individually, in a mixture or successively. Products with ethylene oxide end blocks are characterized, for example, by a somewhat more "hydrophilic character" which may influence the foam formulation and the choice of blowing agent in the case of rigid foams for insulation purposes, and resulting foam physical properties, including its thermal insulating performance.

The generic term "natural oil component" as used in the present invention describes fatty acid esters and/or fatty acid glycerides, in particular fatty acid triglycerides, and/or fatty acid esters based on other mono- and polyfunctional alcohols. The fatty acid radicals of the fatty acid esters can, as in the case of castor oil, carry hydroxyl groups. It is of course also possible to employ in the process according to the invention fatty acid esters, the fatty acid radicals of which have been modified subsequently with hydroxyl groups. Fatty acid radicals modified in this way can be obtained, for example, by epoxidation of the olefinic double bonds and subsequent ring-opening of the oxirane rings by means of nucleophiles or by hydroformylation / hydrogenation. Unsaturated oils are often also treated with atmospheric oxygen at elevated temperature for this purpose.

All fatty acid triglycerides obtained from naturally occurring fats and oils are suitable for use as natural oil components for the processes according to the invention. There may be mentioned, by way of example, camelina oil, canola oil, coconut oil, cottonseed oil, flaxseed oil, groundnut oil, coconut oil, linseed oil, palm kernel oil, olive oil, maize oil, mustard oil, palm oil, peanut oil, castor oil, lesquerella oil, limnanthes (meadowfoam) oil, rapeseed oil, safflower oil, soya or soybean oil, sunflower oil, herring oil, sardine oil, cod liver oil, tallow, butter and lard. In addition, the vegetable oils which result from genetic modification or strain improvements via breeding may also be used in this invention. An example of such a modified vegetable oil would be "high erucic acid content rapeseed" or canola oils. In addition, the lipids which are derived from jatropha curus and those obtained from various strains of algae and microalgae are also suitable for the present invention. Furthermore, fatty acid esters of other mono- or polyfunctional alcohols and fatty acid glycerides having less than 3 fatty acid radicals per glycerol molecule can of course also be employed in the process according to the invention. The fatty acid (tri)glycerides and the fatty acid esters of other mono- and polyfunctional alcohols can also be employed in the mixture.

In addition, it should be made clear that many animal or vegetable derived fats and oils have been treated by the process of hydrogenation to improve their shelf life and raise their melting point temperature. This is well known in the art. Any of the above mentioned fats or oils can also be employed in the present invention in the form of a hydrogenated fat or oil, e.g., hydrogenated tallow, or hydrogenated soybean oil. Similarly, it is well known in the fat and oil industry to heat an unsaturated oil in the absence of air in order to permit intermolecular reactions that increase the average molecular weight of the fat or oil; the product of such heat treatment is known as a "bodied oil." It should be made known that any bodied oil or fat can also be employed in this invention, e.g., bodied soybean oil.

At this point it is to be emphasized that the transesterification/alkoxylation process of preparing liquid base polyols described herein is particularly suitable for converting fatty acid esters without OH groups in the fatty acid radicals, such as, for example, fatty acid esters based on lauric myristic, palmitic, stearic, palmitoleic, oleic, erucic, linoleic, linolenic elaeostearic or arachidonic acid or mixtures thereof, into the desired base polyether polyols. This is because the incorporation of the fatty acid chains into the polyol does not require that these chains provide hydroxyl groups for the subsequent urethane reaction. The formulation of the base polyether polyol is such that there are always sufficient hydroxyl groups without any such contribution from the natural oil components.

The proper preparation of the low molecular weight base polyol requires proper selection of the quantities of the reactants which are selected to form the base polyether polyol. In particular, attention to the mole ratios of the reactants is necessary. By selecting appropriate quantities of reactants such that the base polyol component which is formed has the desired hydroxyl number and the desired average functionality as specified herein, this will help to ensure that the natural oil component is completely incorporated, i.e. completely reacted, into the base polyol. It is also necessary to be certain that there will be sufficient quantity of Zerewitinoff active hydrogen atoms such that that the resultant base polyol has a hydroxyl number and a theoretical average functionality which fall with the ranges specified herein. This is accomplished by carrying out a hydroxyl balance on the combination of reactants which have been selected to form the base polyol, checking the results of the calculations, and then making adjustments to the quantities of reactants until the computed values appear to be judicious choices.

For each reactant, it is necessary to know details such as, for example, the purity, composition, molecular weight, and concentration of Zerewitinoff active hydrogen atoms. One can then postulate the relative amounts of each of the reactants for the proposed base polyol. This is typically done by considering the mass of each reactant that could be used in a suitable reaction apparatus, for example. Regardless of how the reactant amounts are selected, the effective composition of the base polyol is then tabulated in terms of all these reactants and calculated in two ways, in moles and in effective weight fraction of the base polyol.

One then calculates the expected hydroxyl number of the base polyol by summing the product of:

$$\text{(weight fraction of reactant)} \times \text{(Hydroxyl number of the reactant)}$$

$$\text{for all proposed reactants.}$$

To be suitable for use in this invention, this value should fall within the range of 190 to 500; most preferably in the range of 300 to 400.

It will be necessary to calculate the expected average functionality of the base polyol. This is determined by calculating the quotient in which the numerator consists of the summation over all reactants of the mass of the Zerewitinoff active hydrogen atom compound divided by the equivalent weight of said compound; and the denominator consists of the summation over all reactants of the moles of each natural oil component plus the summation over all reactants of the moles of each Zerewitinoff active hydrogen atom compound. This calculational method provides a theoretical value of the average functionality of the base polyol, which neglects the isomerization of propylene oxide to allyl alcohol forming additional hydroxyl groups because this reaction does not occur to any significant degree in the hydroxyl number range of interest in the synthesis of the base polyol.

To be suitable for use in this invention, the resultant base polyol should have an average functionality within the range of 1.7 to 5.0.

These calculations provide one of ordinary skill in the art a method by which one can select appropriate combinations of reactants and varying mole ratios of these reactants in which all of the individual reactants will be completely incorporated into the base polyol component.

It is also possible to investigate various combinations experimentally by making base polyols with a variety of different reactants and variety of mole ratios. Some of the experimental techniques which can be employed to check for complete incorporation of all reactants include, for example, visual inspection of the base polyol for more than one phase, filtering the base polyol to inspect for residual solid reactants, size exclusion chromatography and similar liquid or gas chromatographic techniques which can be calibrated with reactant components or pure compound standards to determine the relative composition of the base polyol.

As a general rule, a base polyol with two or more liquid phases at room temperature and pressure would not be considered as an acceptable combination of reactants. More than one liquid phase in the base polyol component indicates that complete incorporation of reactants into the base polyol did not occur.

The natural oil components employed in the preparation of the base polyether polyols according to the invention in amounts of from 5 to 85 wt. %, preferably 20 to 60 wt. %, based on the amount of end product.

In one embodiment of the invention, an alkali metal or alkaline earth metal hydroxide, preferably potassium hydroxide, is used as the basic catalyst. The catalyst can be added to the reaction mixture in the form of aqueous solutions, or in anhydrous form. Preferably, any water of solution present or water formed by the deprotonation of the OH groups is removed before the addition of the natural oil components to the reaction mixture. The dehydration can be carried out, for example, by heat treatment under reduced pressure at temperatures of from 80°C to 150 °C, and can optionally be assisted by stripping with inert gas. Residual traces of water can finally be removed from the reaction mixture by reaction with small amounts of alkylene oxide before addition of the natural oil component. As a rule, 5 wt. % of alkylene oxide, based on the total amount of reaction mixture contained in the reactor, is sufficient for this. The catalyst concentration is 0.02 to 1 wt. %, based on the amount of end product, and 0.05 to 0.25 wt. % of catalyst is preferably employed.

In another embodiment of the invention, alkylene oxide addition products of hydroxyl-functional starter compounds having alkoxylate contents of from 0.05 to 50 equivalent% ("polymeric alkoxylates") are employed as the basic catalysts. Alkoxylate content is to be understood as meaning the content of Zerewitinoff-active hydrogen atoms removed by a base by deprotonation out of all the Zerewitinoff-active hydrogen atoms in the catalyst.

The polymeric alkoxylate employed as the catalyst can be prepared in a separate reaction step by alkali-catalyzed addition of alkylene oxides on to the starter compounds having Zerewitinoff-active hydrogen atoms already mentioned above. Conventionally, an alkali metal or alkaline earth metal hydroxide, e.g. KOH, is employed as the catalyst in the preparation of the polymeric alkoxylate in amounts of from 0.1 to 1 wt. %, based on the amount to be prepared, the reaction mixture is dehydrated *in vacuo,* the alkylene oxide addition reaction is carried out under an inert gas atmosphere at 100 to 150°C until an OH number of from 150 to 1,200 mg KOH/g is reached, and thereafter the product is adjusted to the above mentioned alkoxylate contents of from 0.05 to 50 equivalent% by addition of further alkali metal or alkaline earth metal hydroxide and subsequent dehydration. This process forms VGSM (vacuum glycerin start medium). Polymeric alkoxylates prepared in such a way can be stored separately under an inert gas atmosphere. They have already been employed for a long time in the preparation of long-chain polyether polyols. The amount of polymeric alkoxylate employed in the process according to the invention is conventionally chosen such that it corresponds to an amount of alkali metal or alkaline earth metal hydroxide, based on the end product according to the invention, of from 200 ppm to 1 wt.%. The polymeric alkoxylates can of course also be employed as mixtures.

The polymeric alkoxylates can also be prepared *in situ* in the same reactor directly before the process according to the invention is carried out. In this case, the amount of polymeric alkoxylate necessary for a polymerization batch is prepared in the reactor by the procedure described in the preceding paragraph. In this procedure it is of course to be ensured that the extremely low amounts of starter compound (i.e. initiator compound) can also be stirred at the start of the reaction. This can be achieved, if appropriate, by the use of inert solvents, such as toluene and/or THF.

In a third embodiment of the invention, aliphatic or aromatic amines are employed as basic catalysts. Amines which can be employed as catalysts are, for example, aliphatic amines or alkanolamines, such as N,N-dimethylbenzylamine, dimethylaminoethanol, dimethylaminopropanol, N-methyldiethanolamine, trimethylamine, N,N-dimethylcyclohexylamine, N-methylpyrrolidine, N,N,N',N'-tetramethylethylenediamine, diazabicyclo[2,2,2]octane, 1,4,dimethylpiperazine or N-methylmorpholine. Aromatic amines, such as imidazole and alkyl-substituted imidazole derivatives, N,N-dimethylaniline, 4-(N,N-dimethyl)aminopyridine and partly crosslinked copolymers of 4-vinylpyridine or vinylimidazole and divinylbenzene, are also readily usable. A comprehensive overview of amines which can be used has been given by M. Ionescu et al. in "Advances in Urethanes Science and Technology", 1998, 14, 151-218. Preferably, tertiary aliphatic amines or alkanolamines are employed, as well as imidazole and the imidazole or pyridine derivatives mentioned. The catalysts can be employed in concentrations of from 200 ppm to 10,000 ppm, based on the amount of end product, and the concentration range of from 200 ppm to 5,000 ppm is preferred.

The process for preparing the clear liquid base polyol component of the present invention is carried out in detail as follows: The low molecular weight starter compounds, catalyst(s) and finally a natural oil component are initially introduced into the reactor and are reacted with alkylene oxides under an inert gas atmosphere at temperatures of 80°C to 170 °C, preferably 100°C to 150°C (or 80°C to 150°C if amine catalysts are used), the alkylene oxides being fed continuously to the reactor in the usual manner such that the safety pressure limits of the reactor system used are not exceeded. Such reactions are conventionally carried out in the pressure range of from 10 mbar to 10 bar. After the end of the alkylene oxide metering phase, an after-reaction phase conventionally follows, in which residual alkylene oxide reacts. The end of the after-reaction phase is reached when no further drop in pressure can be detected in the reaction tank. In order to exclude the presence of water with certainty, dehydration can also be carried out *in vacuo* at temperatures of 80°C to 150°C (or 40°C to 130°C if amine catalysts are used), optionally by additional stripping with inert gas, before the addition of the natural oil component. If amines are used as catalysts, these can also first be added after such a dehydration step. It is also possible first to prelengthen the starter compounds by polymerizing on a certain amount of alkylene oxide before the addition of the natural oil component. If the starter compounds are merely to be freed from traces of water by the prior metering of alkylene oxide, 5 wt. % of alkylene oxide, based on the contents of the reactor, is in general sufficient.

If amine catalysts are employed, these are usually left in the end product. If other catalysts are employed, working up of the reaction products obtained is necessary to arrive at the base polyether polyols according to the invention.

When using alkaline catalysts, any residual alkalinity can be removed from the base polyether polyols by neutralization. Any precipitated salts which form in the base polyether polyols due to the neutralization may be removed by, for example, filtration. In other words, the base polyether polyols are treated in accordance with conventional processes for treating polyether polyols.

Working up of the base polyether polyols according to the invention is carried out in the conventional manner by neutralization of the alkoxylate end groups with carboxylic acids, typically used in greater than stoichiometric amounts. Working up using adsorption agents is also possible, as described e.g. in WO 2003/106535. It is furthermore possible, as demonstrated, for example, in WO 2001/10880 or DE-A 34 01 780, to carry out the working up by means of ion exchange on acid cation exchangers.

The use of adsorption agents is of advantage especially in the preparation of small (pilot) amounts of the products according to the invention. They must be separated off from the end product by filtration. If carboxylic acids, such as, for example, lactic acid, are used, possibly soluble alkali metal salts may be obtained in the polyol, which can remain in the product provided that the intended use of the base polyether polyol can tolerate the concentration of the alkali metal carboxylate remaining.

Suitable compounds to be used as the ethylenically unsaturated monomers, i.e. component (b) the present invention include, for example, those ethylenically unsaturated monomers which are known to be useful in polymer polyols. Suitable monomers include, for example, aliphatic conjugated dienes such as butadiene and isoprene; monovinylidene aromatic monomers such as styrene, $\alpha$-methyl-styrene, (t-butyl)styrene, chlorostyrene, cyanostyrene and bromostyrene; $\alpha,\beta$-ethylenically unsaturated carboxylic acids and esters thereof such as acrylic acid, methacrylic acid, methyl methacrylate, ethyl acrylate, 2-hydroxyethyl acrylate, butyl actylate, itaconic acid, maleic anhydride and the like; $\alpha,\beta$-ethylenically unsaturated nitriles and amides such as acrylonitrile, methacrylonitrile, acrylamide, methacrylamide, N,N-dimethyl acrylamide, N-(dimethylaminomethyl)acrylamide and the like; vinyl esters such as vinyl acetate; vinyl ethers, vinyl ketones, vinyl and vinylidene halides as well as a wide variety of other ethylenically unsaturated materials which are copolymerizable with the aforementioned monomeric adduct or reactive monomer. It is understood that mixtures of two or more of the aforementioned monomers are also suitable employed in making the pre-formed stabilizer. Of the above monomers, the monovinylidene aromatic monomers, particularly styrene, and the ethylenically unsaturated nitriles, particularly acrylonitrile is preferred. In accordance with this aspect of the present invention, it is preferred that these ethylenically unsaturated monomers include styrene and its derivatives, acrylonitrile, methyl acrylate, methyl methacrylate, vinylidene chloride, with styrene and acrylonitrile being particularly preferred monomers.

It is preferred that styrene and acrylonitrile are used in sufficient amounts such that the weight ratio of styrene to acrylonitrile (S:AN) is from about 80:20 to 20:80, more preferably from about 75:25 to 60:40. These ratios are suitable for polymer polyols and the processes of preparing them, regardless of whether they comprise the ethylenically unsaturated macromers or the pre-formed stabilizers of the present invention.

Overall, the quantity of ethylenically unsaturated monomer(s) present in the polymer polyols is at least about 20% by weight, preferably at least about 30% by weight, more preferably at least about 40% by weight, and most preferably at least about 45% by weight, based on 100% by weight of the polymer polyol. The quantity of ethylenically unsaturated monomer(s) present in the polymer polyols is about 60% by weight or less, and preferably about 55% by weight of less. The polymer polyols of the present invention typically has a solids content ranging between any combination of these upper and lower values, inclusive, e.g. from 20% to 60% by weight, preferably from 30% to 55% by weight, more preferably from 40% to 55% by weight, and most preferably from 45% to 55% by weight, based on the total weight of the polymer polyol.

Preformed stabilizers, component (c), are optional in accordance with the present invention. It is, however, preferred that a preformed stabilizer is present in the polymer polyols and process of preparing these polymer polyols. Suitable preformed stabilizers include, for example, those which are known in the art and include without limitation those described in the references discussed herein. Preferred preformed stabilizers include those discussed in, for example, U.S. Patents 4,148,840 (Shah), 5,196,476 (Simroth), 5,364,906 (Critchfield) 5,990,185 (Fogg), 6,013,731 (Holeschovsky et al.), 6,455,603 (Fogg), and 7,179,882 (Adkins et al.), the disclosures of which are hereby incorporated by reference.

The process for producing the preformed stabilizer is similar to the process for making the polymer polyol. The temperature range is not critical and may vary from about 80°C to about 150°C or greater, with the preferred range being from 115°C to 125°C. The catalyst and temperature should be selected so that the catalyst has a reasonable rate of decomposition with respect to the hold-up time in the reactor for a continuous flow reactor or the feed time for a semi-batch reactor.

The mixing conditions employed are those obtained using a back mixed reactor (e.g. -a stirred flask or stirred autoclave). The reactors of this type keep the reaction mixture relatively homogeneous and so prevent localized high monomer to macromer ratios such as occur in tubular reactors, where all of the monomer is added at the beginning of the reactor.

The preformed stabilizers, component (c), of the present invention comprise dispersions in the diluent and any unreacted monomer in which the preformed stabilizer is probably present as individual molecules or as groups of molecules in "micelles," or on the surface of small polymer particles.

Suitable free-radical initiators to be used as component (d) in the present invention include, for example, those which are known to be suitable for polymer polyols. Examples of suitable free-radical polymerization initiators for the present invention include initiators such as, for example, peroxides including both alkyl and aryl hydroperoxides, persulfates, perborates, percarbonates, azo compounds, etc. Some specific examples include catalysts such as hydrogen peroxide, di(t-butyl)-peroxide, t-butylperoxy diethyl acetate, t-butyl peroctoate, t-butyl peroxy isobutyrate, t-butyl peroxy 3,5,5-trimethyl hexanoate, t-butyl perbenzoate, t-butyl peroxy pivalate, t-amyl peroxy pivalate, t-butyl peroxy-2-ethyl hexanoate, lauroyl peroxide, cumene hydroperoxide, t-butyl hydroperoxide, azobis(isobutyronitrile), 2,2'-azo bis-(2-methylbutyronitrile), etc.

Useful initiators also include, for example, those catalysts having a satisfactory half-life within the temperature ranges used in forming the polymer polyol. Typically, the half-life of the catalyst should be about 25% or less of the residence time in the reactor at any given time. Preferred initiators for this portion of the invention include acyl peroxides such as didecanoyl peroxide and dilauroyl peroxide, alkyl peroxides such as t-butyl peroxy-2-ethylhexanoate, t-butylperpivalate, t-amyl peroxy pivalate, t-amyl peroctoate, 2,5-dimethylhexane-2,5-di-per-2-ethyl hexoate, t-butyl perneodecanoate, t-butylperbenzoate and 1,1-dimethyl-3-hydroxybutyl peroxy-2-ethylhexanoate, and azo catalysts such as azobis(isobutyronitrile), 2,2'-azo bis-(2-methoxyl-butyronitrile), and mixtures thereof. Most preferred are the alkyl peroxides described above and the azo catalysts.

The quantity of free-radical initiator used herein is not critical and can be varied within wide limits. In general, the amount of initiator ranges from about 0.01 to 2% by weight, based on 100% by weight of the final polymer polyol. Increases in catalyst concentration result in increases in monomer conversion up to a certain point, but past this, further increases do not result in substantial increases in conversion. The particular catalyst concentration selected will usually be an optimum value, taking all factors into consideration including costs.

In addition, the polymer polyol and the process of preparing the polymer polyol may optionally comprise a chain transfer agent, i.e. component (e). The use of chain transfer agents and their nature is known in the art. Chain transfer agents are also commonly referred to as polymer control agents (PCA's), molecular weight regulators and/or reaction moderators. Typically, chain transfer agents serve to control the molecular weight of the polymer polyol.

Suitable chain transfer agents and processes for their preparation are known and described in, for example, U.S. Patents 3,953,393, 4,119,586, 4,463,107, 5,324,774, 5,814,699 and 6,624,209, the disclosures of which are hereby incorporated by reference. Any of the known chain transfer agents may be suitable herein, provided it does not adversely affect the performance of the polymer polyol. Some examples of suitable materials to be used as chain transfer agents include compounds methanol, ethanol, n-propanol, isopropanol, n-butanol, sec-butanol, tert-butanol, n-pentanol, 2-pentanol, 3-pentanol, allyl alcohols, toluene, ethylbenzene, mercaptans including, e.g. dodecylmercaptan, octadecylmercaptan, ethane thiol, toluene thiol, etc., halogenated hydrocarbons such as, e.g. methylene chloride, carbon tetrachloride, carbon tetrabromide, chloroform, etc., amines such as diethylamine, triethylamine, enol-ethers, etc. If used in the present invention, a chain transfer agent is typically present in an amount of from about 0.1 to about 10% by weight, more preferably from about 0.2 to about 8% by weight, based on the total weight of the polymer polyol (prior to stripping). Although not required, chain transfer agents typically are removed from the product at the end of the process by common methods such as vacuum distillation.

Preferred chain transfer agents are ethanol, isopropanol, tert-butanol, toluene and ethylbenzene.

The polymer polyols are preferably produced by utilizing a low monomer to polyol ratio which is maintained throughout the reaction mixture during the process. This is achieved by employing conditions that provide rapid conversion of monomer to polymer. In practice, a low monomer to polyol ratio is maintained, in the case of semi-batch and continuous operation, by control of the temperature and mixing conditions and, in the case of semibatch operation, also by slowly adding the monomers to the polyol.

The temperature range is not critical and may vary from about 100°C to about 140°C or greater, and the preferred range being from 115°C to 125 °C. As has been noted herein, the catalyst and temperature should be selected so that the catalyst has a reasonable rate of decomposition with respect to the hold-up time in the reactor for a continuous flow reactor or the feed time for a semi-batch reactor.

The mixing conditions employed are those obtained using a back mixed reactor (e.g.-a stirred flask or stirred autoclave). The reactors of this type keep the reaction mixture relatively homogeneous and so prevent localized high monomer to polyol ratios such as occur in tubular reactors when such reactors are operated with all the monomer added to the beginning of the reactor.

The polymer polyols of the present invention comprise dispersions in which the polymer particles (the same being either individual particles or agglomerates of individual particles) are relatively small in size and, in the preferred embodiment, have a weight average size less than about ten microns. However, when high contents of styrene are used, the particles will tend to be larger; but the resulting polymer polyols are highly useful, particularly where the end use application requires as little scorch as possible.

Following polymerization, volatile constituents, in particular any residues of monomers or chain transfer agents are generally stripped from the product by the usual method of vacuum distillation, optionally in a thin layer of a falling film evaporator. The monomer-free product may be used as is, or may be filtered to remove any large particles that may have been created.

In the preferred embodiment, all of the product (viz. 100%) will pass through the filter employed in the 150 mesh filtration hindrance (filterability) test that will be described in conjunction with the Examples. This ensures that the polymer polyol products can be successfully processed in all types of the relatively sophisticated machine systems now in use for large volume production of polyurethane products, including those employing impingement-type mixing which necessitate the use of filters that cannot tolerate any significant amount of relatively large particles.

In accordance with the present invention, the following materials and processes are suitable for preparation of polyurethane foams from the polymer polyols described above. Generally speaking, polyurethane foams are prepared by reacting a polyisocyanate component with an isocyanate-reactive component, in the presence of at least one blowing agent, at least one catalyst, and at least one surfactant.

Suitable polyisocyanates are known to those skilled in the art and include unmodified isocyanates, modified polyisocyanates, and isocyanate prepolymers. Such organic polyisocyanates include aliphatic, cycloaliphatic, araliphatic, aromatic, and heterocyclic polyisocyanates of the type described, for example, by W. Siefken in Justus Liebigs Annalen der Chemie, 562, pages 75 to 136. Examples of such isocyanates include those represented by the formula,

$$Q(NCO)_n$$

in which n is a number from 2-5, preferably 2-3, and Q is an aliphatic hydrocarbon group containing 2-18, preferably 6-10, carbon atoms; a cycloaliphatic hydrocarbon group containing 4-15, preferably 5-10, carbon atoms; an araliphatic hydrocarbon group containing 8-15, preferably 8-13, carbon atoms; or an aromatic hydrocarbon group containing 6-15, preferably 6-13, carbon atoms.

Examples of suitable isocyanates include ethylene diisocyanate; 1,4-tetramethylene diisocyanate; 1,6-hexamethylene diisocyanate; 1,12-dodecane diisocyanate; cyclobutane-1,3-diisocyanate; cyclohexane-1,3- and -1,4-diisocyanate, and mixtures of these isomers; 1-isocyanato-3,3,5-trimethyl-5-isocyanatomethylcyclohexane (isophorone diisocyanate; e.g. German Auslegeschrift 1,202,785 and U.S. Patent 3,401,190); 2,4- and 2,6-hexahydrotoluene diisocyanate and mixtures of these isomers; dicyclohexylmethane-4,4'-diisocyanate (hydrogenated MDI, or HMDI); 1,3- and 1,4-phenylene diisocyanate; 2,4- and 2,6-toluene diisocyanate and mixtures of these isomers (TDI); diphenylmethane-2,4'- and/or -4,4'-diisocyanate (MDI); naphthylene-1,5-diisocyanate; triphenylmethane-4,4',4"-triisocyanate; polyphenyl-polymethylene-polyisocyanates of the type which may be obtained by condensing aniline with formaldehyde, followed by phosgenation (crude MDI), which are described, for example, in GB 878,430 and GB 848,671; norbornane diisocyanates, such as described in U.S. Patent 3,492,330; m- and p-isocyanatophenyl sulfonylisocyanates of the type described in U.S. Patent 3,454,606; perchlorinated aryl polyisocyanates of the type described, for example, in U.S. Patent 3,227,138; modified polyisocyanates containing carbodiimide groups of the type described in U.S. Patent 3,152,162; modified polyisocyanates containing urethane groups of the type described, for example, in U.S. Patent 3,394,164 and 3,644,457; modified polyisocyanates containing allophanate groups of the type described, for example, in GB 994,890, BE 761,616, and NL 7,102,524; modified polyisocyanates containing isocyanurate groups of the type described, for example, in U.S. Patent 3,002,973, German Patentschriften 1,022,789, 1,222,067 and 1,027,394, and German Offenlegungsschriften 1,919,034 and 2,004,048; modified polyisocyanates containing urea groups of the type described in German Patentschrift 1,230,778; polyisocyanates containing biuret groups of the type described, for example, in German Patentschrift 1,101,394, U.S. Patent 3,124,605 and 3,201,372, and in GB 889,050; polyisocyanates obtained by telomerization reactions of the type described, for example, in U.S. Patent 3,654,106; polyisocyanates containing ester groups of the type described, for example, in GB 965,474 and GB 1,072,956, in U.S. Patent 3,567,763, and in German Patentschrift 1,231,688; reaction products of the above-mentioned isocyanates with acetals as described in German Patentschrift 1,072,385; and polyisocyanates containing polymeric fatty acid groups of the type described in U.S. Patent 3,455,883. It is also possible to use the isocyanate-containing distillation residues accumulating in the production of isocyanates on a commercial scale, optionally in solution in one or more of the polyisocyanates mentioned above. Those skilled in the art will recognize that it is also possible to use mixtures of the polyisocyanates described above.

In general, it is preferred to use readily available polyisocyanates, such as 2,4- and 2,6-toluene diisocyanates and mixtures of these isomers (TDI); polyphenyl-polymethylene-polyisocyanates of the type obtained by condensing aniline with formaldehyde, followed by phosgenation (crude MDI); and polyisocyanates containing carbodiimide groups, urethane groups, allophanate groups, isocyanurate groups, urea groups, or biuret groups (modified polyisocyanates).

Isocyanate-terminated prepolymers may also be employed in the preparation of the flexible foams of the present invention. Prepolymers may be prepared by reacting an excess of organic polyisocyanate or mixtures thereof with a minor amount of an active hydrogen-containing compound as determined by the well-known Zerewitinoff test, as described by Kohler in "Journal of the American Chemical Society," 49, 3181(1927). These compounds and their methods of preparation are well known to those skilled in the art. The use of any one specific active hydrogen compound is not critical; any such compound can be employed in the practice of the present invention.

In accordance with the present invention, the isocyanate-reactive component for the polyurethane foams herein comprise a polymer polyol as described above. It is readily apparent that a conventional polyol component such as, for example, polyethers, polyesters, polyacetals, polycarbonates, polyesterethers, polyester carbonates, polythioethers, polyamides, polyesteramides, amine-terminated polyethers, polysiloxanes, polybutadienes and polyacetones, polybutadienes, polycaprolactones, as well as conventional polymer polyols, PHD modified polyols and/or PIPA modified polyols which are not based on natural oil polyols; and low molecular weight crosslinkers, chain extenders, and reactive modifiers, etc., and mixtures thereof, etc. may also be present as a portion of the isocyanate-reactive component. It is also readily apparent that natural oil polyols such as those base polyols used or described as being suitable for producing the polymer polyols of the current invention may also be added to the isocyanate reactive component to further increase the renewable content of the foams. Renewable polyols added in this manner do not eliminate the amount of renewable polyol required in the base polyol used in preparation of the polymer polyol component. In accordance with the present invention, the isocyanate-reactive component herein preferably comprises from 5 to 100% by weight of a polymer polyol of the present invention (i.e. a polymer polyol in which the base polyol comprises a natural oil polyol as described hereinabove) and from 0 to 95% by weight of a conventional polyol component, with the sum totaling 100% by weight of the isocyanate-reactive component.

Suitable blowing agents for component (III) of the polyurethane foams herein include but are not limited to compounds such as, for example, water, carbon dioxide, methylene chloride, acetone, fluorocarbons, chlorofluorocarbons, hydrochlorofluorocarbons, perfluorocarbons, and low boiling hydrocarbons. Some examples of suitable hydrochlorofluoro-carbons include compounds such as 1,1-dichloro-1-fluoroethane (HCFC-141b), 1-chloro-1,1-difluoroethane (HCFC-142b), and chlorodifluoro-methane (HCFC-22); of suitable hydrofluorocarbons include compounds such as 1,1,1,3,3-pentafluoropropane (HFC-245fa), 1,1,1,2-tetrafluoroethane (HFC-134a), 1,1,1,3,3,3-hexafluoro-propane (HFC-236fa), 1,1,2,3,3,3-hexafluoropropane (HFC-236ea), and 1,1,1,4,4,4-hexafluorobutane (HFC-356mffm); of suitable perfluorinated hydrocarbons include compounds such as perfluoropentane or perfluorohexane; and of suitable hydrocarbons include compounds such as various isomers of butane, pentane, cyclopentane, hexane, or mixtures of thereof. Water and carbon dioxide are more preferred blowing agents, with water being most preferred.

In accordance with the present invention, the quantity of blowing agent used is typically that which will produce foams having a density as described herein. As one of ordinary skill in the art would know and understand, it is necessary to use a larger quantity of blowing agent to form a lower density foam while a higher density foam requires a smaller quantity of blowing agent. The quantity of blowing used should typically produce foams which have a density of about 0.5 pcf or more, preferably about 1.0 pcf or more, more preferably about 1.2 pcf or more, and most preferably about 1.5 pcf or more. The quantity of blowing agent used should also typically produce foams which have a density of less than or equal to 20 pcf, preferably less than or equal to 10 pcf, and more preferably less or equal to 8 pcf and most preferably less than or equal to 5 pcf. The quantity of blowing agent used in the present invention should produce a foam having a density ranging between any combination of these upper and lower values, inclusive, e.g. from at least about 0.5 to about 20 pcf, preferably from about 1.0 to about 10 pcf, more preferably from about 1.2 to about 8 pcf, and most preferably from about 1.5 to about 5 pcf.

Catalysts suitable for the polyurethane foam of the present invention include, for example, amine compounds and organometallic compounds. Suitable examples of such catalysts include tertiary amines, such as triethylamine, tributylamine, N-methylmorpholine, N-ethylmorpholine, N,N,N',N'-tetramethylethylenediamine, pentamethyldiethylenetriamine and higher homologues (as described in, for example, DE-A 2,624,527 and 2,624,528), 1,4-diazabicyclo(2.2.2)octane, N-methyl-N'-dimethyl-aminoethylpiperazine, bis-(dimethylaminoalkyl)piperazines, N,N-dimethylbenzylamine, N,N-dimethylcyclohexylamine, N,N-diethylbenzylamine, bis-(N,N-diethylaminoethyl) adipate, N,N,N',N'-tetramethyl-1,3-butanediamine, N,N-dimethyl-β-phenylethylamine, 1,2-dimethylimidazole, 2-methylimidazole, monocyclic and bicyclic amines together with bis-(dialkylamino)alkyl ethers, such as 2,2-bis-(dimethylaminoethyl) ether.

Other suitable catalysts which may be used in producing the inventive polyurethane foams include, for example, organometallic compounds, and particularly, organotin compounds. Organotin compounds which may be considered suitable include those organotin compounds containing sulfur. Such catalysts include, for example, di-n-octyltin mercaptide. Other types of suitable organotin catalysts include, preferably tin(II) salts of carboxylic acids such as, for example, tin(II) acetate, tin(II) octoate, tin(II) ethylhexoate and/or tin(II) laurate, and tin(IV) compounds such as, for example, dibutyltin oxide, dibutyltin dichloride, dibutyltin diacetate, dibutyltin dilaurate, dibutyltin maleate and/or dioctyltin diacetate.

Surfactants or foam stabilizers which may be suitable for the present invention include, for example, polysiloxanes, polyether siloxanes, and preferably those which are insoluble or have low solubility in water. Compounds such as these are generally of such a structure that copolymers of ethylene oxide and propylene oxide are attached to a polydimethylsiloxane residue. Such foam stabilizers are described in, for example, U.S. Patents 2,834,748, 2,917,480 and 3,629,308, the disclosures of which are hereby incorporated by reference. Other of surface active agents including non-silicone types may also be employed.

Suitable additives which may optionally be included in the polyurethane forming formulations of the present invention include, for example, cell regulators, reaction inhibitors, flame retardants, plasticizers, pigments, fillers, etc. Additional examples of suitable additives, which may optionally be included in the flexible polyurethane foams of the present invention can be found in Kunststoff-Handbuch, volume VII, edited by Vieweg & Hochtlen, Carl Hanser Verlag, Munich 1993, 3rd Ed., pp. 104 to 127, for example.

The following examples further illustrate details for the preparation and use of the compositions of this invention. The invention, which is set forth in the foregoing disclosure, is not to be limited either in spirit or scope by these examples. Those skilled in the art will readily understand that known variations of the conditions and processes of the following preparative procedures can be used to prepare these compositions. Unless otherwise noted, all temperatures are degrees Celsius and all parts and percentages are parts by weight and percentages by weight, respectively.

EXAMPLES

To prepare the base polyol, the following raw materials were employed:

SBO: Soybean oil (refined, i.e. delecithinated, neutralized, decolorized and vapor-stripped), obtained from Cargill Inc., Minneapolis, MN

VGSM: a vacuum glycerin start medium having an OH number of 1020 mg KOH/gm and a potassium hydroxide concentration of 0.80 (wt) % as measured by titration with HCl and calculated as weight percent of "KOH".

Anti-Oxidant A: octadecyl 3-(3,5-di-tert-butyl-4-hydroxyphenyl) propionate which is commercially available from Ciba as IRGANOX® 1076

Preparation of a vacuum glycerin start media (VGSM):

77.7 kg of glycerin and 2.44 kg of aqueous potassium hydroxide solution (45%) were charged at room temperature to an 80-gallon (roughly 300 liter) stainless steel pressure-rated alkoxylation reactor. The reactor vessel was purged with nitrogen, closed, and heated to 110°C. Steady and thorough stirring of the liquid phase was applied, and then vacuum was applied to the vapor space. Nitrogen was sparged through the liquid phase at a low rate to assist the mass transfer. Water vapor removed by the vacuum was condensed external to the reactor, and the vacuum was discontinued after a period of one to two hours when it was determined that the rate of water being condensed had greatly diminished, and for all practical purposes no additional water was being removed anymore. The vacuum was discontinued, and the reactor was sealed in to prepare for feeding of propylene oxide. Propylene oxide (61.2 kg) was fed to the reactor gradually while cooling was applied such that the temperature of the liquid phase was maintained at 105°C. The PO was post-reacted completely. The product was cooled under nitrogen. This product intermediate, VGSM, was characterized by a hydroxyl number of 1020 (mg KOH/gm), and potassium hydroxide concentration of 0.80% by weight as "KOH".

The following two Base Polyols (Base Polyol A and Base Polyol B) as set forth in Table 1 were made via the process described below.

Table 1: Base Polyols

| Base Polyol | Initiator/NOP/AO | OH number | Mean Functionality (calc.) | Viscosity (cSt) | Renewable Resources Content, % by weight | Vegetable Oil Content, % by weight |
|---|---|---|---|---|---|---|
| Base Polyol A | Suc/Gly/SBO/PO | 397 | 3.5 | 2470 | 64 | 37 |

(continued)

| Base Polyol | Initiator/NOP/AO | OH number | Mean Functionality (calc.) | Viscosity (cSt) | Renewable Resources Content, % by weight | Vegetable Oil Content, % by weight |
|---|---|---|---|---|---|---|
| Base Polyol B | Gly/SBO/EO | 207 | 2.1 | 133 | 57 | 45 |
| NOP: natural oil<br>AO: alkylene oxide<br>Suc: sucrose<br>Gly: glycerin<br>SBO: Soybean Oil<br>PO: propylene oxide<br>EO: ethylene oxide | | | | | | |

The preparation of these base polyether polyols was in accordance with the following procedure. KOH type of catalysis was employed in preparing both base polyether polyols. The KOH was provided in an essentially anhydrous form by means of the vacuum glycerine start medium (VGSM) described above.

Preparation of Base Polyol A:

Base Polyol A was a short chain polyether polyol with a high content of renewable resources. This base polyol was prepared as follows:
41.3 kg of VGSM, 34.7 kg of sucrose and 82.1 kg of soybean oil (refined, bleached and de-odorized) were charged at room temperature to an 80-gallon (roughly 300 liter) stainless steel pressure-rated alkoxylation reactor under a "nitrogen sweep" through the vapor space.

The reactor was closed and pressurized to 1.5 bar, absolute with nitrogen, and the pressure was released. This was repeated two additional times to ensure that the reactor was made air-free prior to the application of heat. Pressure of from 0.5 to 1.0 bar, absolute, was established inside the reactor with nitrogen. The contents of the reactor were heated to 115°C.

Propylene oxide (PO) was fed to the reactor gradually while the temperature of the liquid phase was maintained at 115°C. The feed rate of PO was controlled by a feedback loop control system to maintain a constant pressure.

A total of 61.8 kg of propylene oxide was fed in 300 minutes. The mixture in the reactor was post-reacted at 115°C to 120°C, until the pressure decreased to a stable value, which indicated that all of the PO reacted.

The contents of the reactor was cooled to 90°C, then 0.63 kg of aqueous lactic acid of strength 88%(w/w) was added to neutralize the residual alkalinity of the base polyol. The mixture was heated back up to 110°C, and full vacuum was applied to the vapor space of the reactor to remove the moisture from the polyol product. Anti-Oxidant A was added in a sufficient amount to correspond to 500ppm of anti-oxidant in the base polyol product. This was mixed thoroughly, then cooled and the product was discharged from the reactor under a nitrogen "blanket."

The polyether polyol product (Base Polyol A) was a clear liquid with a uniform appearance. By visual inspection there were no grains of unreacted sucrose found residing in the reactor vessel, nor settling out of the liquid polyol product. The analytical properties of Base Polyol A are set forth in Table 2A:

Table 2A: Properties of Base Polyol A

| | |
|---|---|
| Hydroxyl Number, (mg KOH/gm) | 397 |
| Viscosity at 25C, mPa-sec | 2470 |
| MW distribution, Polydispersity via GPC | 1.44 |
| Mw Average via GPC | 591 |
| Peak Mw via GPC | 667 |

By theoretical calculation, the mean hydroxyl functionality of this polyether was estimated to be: 3.5. By theoretical mass balance, this base polyol had a renewables content of 63.6%.

Preparation of Base Polyol B:

Base Polyol B was a short chain polyether polyol with a high content of renewable resources. This base polyol was prepared as follows:

45.2 kg of VGSM and 99.8 kg of soybean oil (refined, bleached and de-odorized) were charged at room temperature to an 80-gallon (roughly 300 liter) stainless steel pressure-rated alkoxylation reactor under a "nitrogen sweep" through the vapor space.

The reactor was closed and pressurized to 2 bar, absolute with nitrogen, and the pressure was released. This was repeated two additional times to ensure that the reactor was air-free. The contents of the reactor were heated to 125°C, and nitrogen pressure of 1.1 bar, absolute was established in the reactor.

Ethylene oxide (EO) was fed to the reactor gradually while cooling was applied to the reactor such that the temperature of the liquid phase was maintained at 125°C. The feed rate of EO was controlled by a feedback loop control system and a safety protocol to limit the total quantity of unreacted oxide present in the vapor space of the reactor at any one time, and to generally maintain a constant pressure.

A total amount of 74.9 kg of ethylene oxide was fed in 300 minutes. The reaction mixture was post-reacted at 125°C to 130°C until the pressure decreased to a stable value, which indicated that all of the EO reacted.

The contents of the reactor were cooled to 90°C, and then 0.63 kg of aqueous lactic acid of strength 88% (wt) was added to neutralize the residual alkalinity of the polyol. The reaction mixture was heat back up to 110°C and full vacuum was applied to the vapor space of the reactor to remove moisture from the product. Anti-Oxidant A was added in a sufficient amount to correspond to 500 ppm of anti-oxidant in the polyol product. This was mixed thoroughly, then cooled and the base polyol product was discharged from the reactor while holding it under a nitrogen "blanket."

The polyether product was a clear liquid with a uniform appearance. The analytical properties of Base Polyol B are set forth in Table 2B:

Table 2B: Properties of Base Polyol B

| | |
|---|---|
| Hydroxyl Number, (mg KOH/gm) | 207 |
| Viscosity at 25C, mPa-sec | 144 |
| Color, Gardner | 2 |
| pH (isopropanol / water) | 8 |
| MW distribution, Polydispersity via GPC | 1.15 |
| Mw Average via GPC | 625 |
| Peak Mw via GPC | 748 |

By theoretical calculation, the mean hydroxyl functionality of this polyether was estimated to be: 2.1. By theoretical mass balance, this base polyol had a renewables content of 57%.

These two base polyols, Base Polyol A and Base Polyol B, were subsequently used to made polymer polyols (PMPO) in a separate process.

The following components were used to prepare the polymer polyols:

| | |
|---|---|
| Polyol A: | a propylene oxide adduct of sorbitol, containing 8% ethylene oxide, and having a hydroxyl number of 28 |
| Base Polyol A: | a clear liquid polyether polyol having a functionality of 3.6, a number average molecular weight of 591 and an OH number of 397, and which comprised the transesterification/alkoxylation product of VGSM, sucrose and soybean oil with propylene oxide as described above |
| Base Polyol B: | a clear liquid polyether polyol having a functionality of 2.1, a number average molecular weight of 625 and an OH number of 207, and which comprised the transesterification/alkoxylation product of VGSM and soybean oil with ethylene oxide as described above |
| CTA: | Isopropanol, a chain transfer agent |
| SAN: | styrene:acrylonitrile monomers |
| TMI: | isopropenyldimethyl benzyl isocyanate (an unsaturated aliphatic isocyanate) sold as TMI® by Cytec Industries |
| TBPO: | tert-butylperoxyoctoate |

(continued)

| | |
|---|---|
| AIBN: | 2,2'-azobisisobutyronitrile, a free radical polymerization initiator commercially available as VAZO 64 from E.I. DuPont de Nemours and Co. |
| TAPP: | tert-amylperoxy pivalate, a free-radical polymerization initiator commercially available from Akzo-Nobel and United Initiators |
| Viscosity: | viscosities were measured by Cannon-Fenske viscosmeter (cSt at 25°C) |
| Filtration Hindrance: (i.e. filterability) | filterability was determined by diluting one part by weight sample (e.g. 200 grams) of polymer polyol with two parts by weight anhydrous isopropanol (e.g. 400 grams) to remove any viscosity-imposed limitations and using a fixed quantity of material relative to a fixed cross-sectional are of screen (e.g. 1 1/8 in. diameter), such that all of the polymer polyol and isopropanol solutions pass by gravity through a 150-mesh screen. The 150-mesh screen has a square mesh with an average mesh opening of 105 microns and it is a "Standard Tyler" 150 square-mesh screen. |

General Procedure for Preparation of Macromers:

| | |
|---|---|
| Macromer A: | prepared by heating Polyol A (100 parts), TMI (2 parts) and 100 ppm stannous octoate catalyst at 75°C for 2 hours |

General Procedure for Preparation of Preformed Stabilizers:

The pre-formed stabilizer was prepared in a two-stage reaction system comprising a continuously-stirred tank reactor (CSTR) fitted with an impeller and 4 baffles (first-stage) and a plug-flow reactor (second stage). The residence time in each reactor was about 60 minutes. The reactants were pumped continuously to the reactor from feed tanks through an in-line static mixer and then through a feed tube into the reactor, which was well mixed. The temperature of the reaction mixture was controlled at 120°C. The product from the second-stage reactor overflowed continuously through a pressure regulator designed to control the pressure in each stage at 65 psig. The product, i.e. the preformed stabilizer, then passed through a cooler and into a collection vessel. The preformed stabilizer formulation is disclosed in Table 3.

Table 3: Preformed Stabilizer Composition:

| Preformed Stabilizer | PFS A |
|---|---|
| CTA type | Isopropanol |
| CTA in feed, wt. % | 30-80% |
| Macromer | Macromer A |
| Macromer in feed, wt. % | 10-40% |
| Monomers in feed, wt. % | 10-30% |
| TBPO concentration, wt. % | 0.01-2% |

In Table 3, the wt. % concentrations are based on the total feed.

Polymer Polyol Preparation:

This series of examples relates to the preparation of polymer polyols. The polymer polyols were prepared in a two-stage reaction system comprising a continuously-stirred tank reactor (CSTR) fitted with an impeller and 4 baffles (first-stage) and a plug-flow reactor (second stage). The residence time in each reactor was about 60 minutes. The reactants were pumped continuously from feed tanks through an in-line static mixer and then through a feed tube into the reactor, which was well mixed. The temperature of the reaction mixture was controlled at 115°C or 120°C. The product from the second-stage reactor overflowed continuously through a pressure regulator designed to control the pressure in each stage at 45 psig. The product, i.e. the polymer polyol, then passed through a cooler and into a collection vessel. The crude product was vacuum stripped to remove volatiles. The wt. % total polymer in the product was calculated from the concentrations of monomers measured in the crude polymer polyol before stripping. The preformed stabilizer PFS A described in Table 3 above was used to produce the polymer polyols in the examples in Table 4. All percentages are expressed in terms of wt. % of total feed.

Table 4: Polymer Polyols 1-5

| Example | PMPO 1 | PMPO 2 | PMPO 3 | PMPO 4 | PMPO 5 |
|---|---|---|---|---|---|
| Base Polyol (wt. % in total feed) | A(65.3%) | A(63.6%) | A(60.6%) | B(46.8%) | B(46.8%) |
| SAN Monomers (wt. % in total feed) | 28.6% | 27.7% | 30.6% | 40.3% | 40.3% |
| S:AN wt. ratio | 65:35 | 65:35 | 65:35 | 62:38 | 50:50 |
| PFS A (wt. % in total feed) | 5.5 | 8.3 | 8.3 | 12.5 | 12.5 |
| Total CTA (wt. % in total feed) | 3.6% | 5% | 5% | 7.5% | 7.5% |
| AIBN Initiator (wt. % in total feed) | 0.25% | 0% | 0% | 0% | 0% |
| TAPP Initiator (wt. % in total feed) | 0% | 0.38% | 0.5% | 0.4% | 0.4% |
| Solids (wt. %) | 26% | 24% | 28% | 37% | 39% |
| Viscosity (cSt at 25°C) | 7355 | 7292 | 9723 | 1787 | 12903 |
| OH Number | 293* | 290 | 266 | 114 | 116 |
| 150 Mesh Filtration | 100% | 100% | 100% | 100% | 100% |
| *this OH number is theoretical and was calculated, not measured | | | | | |

All of the polymer polyols formed in Table 4 were storage stable as defined herein. The filtration properties of these polymer polyols did not change significantly after aging in the laboratory for 6 months. Polymer polyols 3-5 were used to prepare foams in cups using a hydrocarbon-blown polyisocyanurate formulation as set forth in Table 5.

In addition to the above described polymer polyols, the following components were used to prepare these foams.

| | |
|---|---|
| Polyester Polyol A: | a polyester polyol prepared phthalic anhydride and diethylene glycol having a functionality of about 2, a number average molecular weight of about 468 and an OH number of about 240, commercially available as Stepanpol® PS-2412 from the Stepan Company, Northfield, IL. |
| Polyol B: | a propylene oxide adduct of sucrose, propylene glycol and water having a functionality of about 5.2 and a hydroxyl number of about 470 |
| Fyrol PCF: | tris(2-chloroisopropyl)phosphate, a flame retardant |
| Saytex RB-79: | diester/ether diol of tetrabromophthalic anhydride, a flame retardant |
| Tegostab B-8465: | silicone surfactant suitable for stabilizing PIR foams, it is a prioduct of Evonik Goldschmidt Corp., Hopewell, VA. |
| Catalyst A: | 75% potassium octoate in 25% diethylene glycol, commercially available as Dabco K15 |
| Catalyst B: | an amine catalyst useful for urethane foam preparation and having the CAS-number 86003-73-8, commercially available as POLYCAT 43 from Air Products and Chemicals Corp., Allentown, PA |
| Catalyst C: | bis(2-dimethylaminoethyl)(methyl)amine, commercially available as Desmorapid PV from Bayer MaterialScience LLC of Pittsburgh, PA |
| Blowing Agent A: | a 70:30 pbw mixture of cyclopentane and 2-methylbutane which is commercially available as EXXSOL™ 1600 from ExxonMobil Chemical Company of Houston, TX. |

Polyisocyanurate foams were made from the parts by weight of the components listed below in the Tables. The polyols and other components were first combined and subsequently reacted with the isocyanate. These foams were prepared in the laboratory using hand mix procedures known to those skilled in the art.

Table 5: Foams Prepared from Polymer Polyols

| Foam Examples | Foam 1 (Control) | Foam 2 | Foam 3 | Foam 4 | Foam 5 |
|---|---|---|---|---|---|
| Foam Formulation: | pbw | pbw | pbw | pbw | pbw |
| Polyester Polyol A | 49.21 | | | | |

(continued)

| Foam Examples | Foam 1 (Control) | Foam 2 | Foam 3 | Foam 4 | Foam 5 |
|---|---|---|---|---|---|
| Foam Formulation: | pbw | pbw | pbw | pbw | pbw |
| Base Polyol B | | 50.15 | | | |
| PMPO 5 | | | | 49.21 | |
| PMPO 4 | | | | | 49.21 |
| PMPO 3 | | | 49.21 | | |
| Polyol B | 16.40 | 16.40 | 16.40 | 16.40 | 16.40 |
| Fyrol PCF | 13.80 | 13.80 | 13.81 | 13.81 | 13.81 |
| Saytex RB-79 | 3.41 | 3.41 | 3.41 | 3.41 | 3.41 |
| Tegostab B-8465 | 2.27 | 2.27 | 2.27 | 2.27 | 2.27 |
| Catalyst A | 1.73 | 1.40 | 1.73 | 1.73 | 1.73 |
| Catalyst B | 0.84 | 0.70 | 0.84 | 0.84 | 0.84 |
| Catalyst C | 0.20 | 0.18 | 0.20 | 0.20 | 0.20 |
| Water | 0.29 | 0.29 | 0.30 | 0.30 | 0.30 |
| Blowing Agent A | 11.85 | 11.40 | 11.83 | 11.83 | 11.83 |
| Polyol, total | 100.00 | 100.00 | 100.00 | 100.00 | 100.00 |
| Iso, total (Isocyanate A) | 157.2 | 146.7 | 166.2 | 166.3 | 155.6 |
| Isocyanate Index | 281 | 280 | 282 | 405 | 381 |
| Handmix Reactivity @25°C (I/R): | | | | | |
| Cream time (sec) | 13 | 10 | 30 | 10 | 9 |
| Gel time (sec) | 32 | 31 | 74 | 34 | 30 |
| Rise time (sec) | 64 | 58 | 116 | 71 | 75 |
| Tack-free time (sec) | 65 | 58 | 126 | 81 | 81 |
| Free-rise density (pcf) | 2.74 | 2.98 | 2.89 | 2.45 | 2.46 |

The general reactivity characteristics of the foam formulations as indicated by the cream times and gel times clearly shows that the foam made from PMPO 3 is considerably slower to react. This is not surprising since this polymer polyol would not contain nearly as high concentration of primary hydroxyl end-groups since it was made with Base Polyol A. The lowest foam densities were in the foams 4 and 5, which were made at higher isocyanate index.

The hand-mix foams prepared from PMPOs of the examples were generally semi-rigid and friable having the general characteristics of energy-absorbing foams.

Foams were re-made using the same formulations as shown above in the laboratory but in larger quantity in order to prepare burn box parts. The resulting foams were tested for combustibility behavior in the small scale laboratory combustion test "Mobay mini-tunnel test."

The results of this test are given below in Table 6.

Table 6:

| Foam Example | Foam 1 | Foam 3 | Foam 4 | Foam 5 |
|---|---|---|---|---|
| Mobay Mini-Tunnel Test, Smoke Value | 283 | 486 | 384 | 314 |
| Mobay Mini-Tunnel Test, Flame Spread Value | 28 | 37 | 38 | 36 |

The Mobay Mini Tunnel Test:

The performance in this small scale tunnel test roughly correlates to results obtained in the Steiner Tunnel used to conduct ASTM E-84 testing. Core foam samples were cut to 6 7/8" x 48" x up to 2" thick (17.46 cm x 121.92 cm x up to 5.08 cm). A sample was placed in the tunnel and ignited by the burner that was positioned such that the flame tip was 14" (35.56 cm) from the start end of the tunnel. Progression of the flame from the burning foam along the tunnel was recorded at timed intervals by an operator observing through windows installed in the tunnel "floor". The operator actually monitors the flame by looking at the reflection in an angled mirror positioned underneath the raised tunnel apparatus. An optical sensor in the tunnel ventilation system gathers data that was used to calculate the smoke index. The Flame Spread Constant of a 48 inch (121.92 cm) sample ($FSC_{48}$) was calculated using the following equation:

$$\frac{\text{Average Distance } - 14}{FSC_{48}} \quad = \quad \frac{29.9\text{-}14}{22}$$

Based on historical comparisons of results obtained for samples tested in both the Steiner Tunnel and the Bayer Mini Tunnel, a $FSC_{48}$ of 25 or less and a smoke index of 250 or less corresponds to an E-84 spread of 25 or less with a smoke index of 450 or less. It is important to note, however, that any results from the Bayer Mini Tunnel test describe the response of materials to heat and flame under controlled laboratory conditions and these should not be used for the appraisal or regulation of the fire hazards associated with them under actual fire conditions.

Although the invention has been described in detail in the foregoing for the purpose of illustration, it is to be understood that such detail is solely for that purpose and that variations can be made therein by those skilled in the art without departing from the spirit and scope of the invention except as it may be limited by the claims. operator observing through windows installed in the tunnel "floor". The operator actually monitors the flame by looking at the reflection in an angled mirror positioned underneath the raised tunnel apparatus. An optical sensor in the tunnel ventilation system gathers data that was used to calculate the smoke index. The Flame Spread Constant of a 48 inch (121.92 cm) sample ($FSC_{48}$) was calculated using the following equation:

$$\frac{\text{Average Distance } - 14}{FSC_{48}} \quad = \quad \frac{29.9\text{-}14}{22}$$

Based on historical comparisons of results obtained for samples tested in both the Steiner Tunnel and the Bayer Mini Tunnel, a $FSC_{48}$ of 25 or less and a smoke index of 250 or less corresponds to an E-84 spread of 25 or less with a smoke index of 450 or less. It is important to note, however, that any results from the Bayer Mini Tunnel test describe the response of materials to heat and flame under controlled laboratory conditions and these should not be used for the appraisal or regulation of the fire hazards associated with them under actual fire conditions.

**Claims**

1.  A stable, low-viscosity polymer polyol comprising the free-radical polymerization product of:

    (a) a clear liquid base polyol component comprising a natural oil base polyol having a mean hydroxyl functionality of 1.7 to 5.0, a number average molecular weight of 350 to 725 and an OH number of 190 to 500, and which comprises the transesterification/alkoxylation product of

        (i) at least one initiator comprising at least one Zerewitinoff-active hydrogen atom;
        (ii) a natural oil component or a mixture of natural oil components; and
        (iii) at least one alkylene oxide;

    in the presence of:

        (iv) at least one alkaline catalyst;

    wherein said alkylene oxide is completely reacted;
    (b) at least one ethylenically unsaturated monomer;

and, optionally,
(c) a preformed stabilizer;

in the presence of:

(d) a free-radical polymerization initiator;
and, optionally,
(e) a chain transfer agent.

2. The stable, low-viscosity polymer polyol of Claim 1, wherein (a) (iv) said alkaline catalyst comprises one or more of the compounds potassium hydroxide, sodium hydroxide, sodium methoxide, potassium methoxide, sodium stearate, calcium oxide and N-methyl imidazole.

3. The stable, low-viscosity polymer polyol of Claim 1, wherein (a) (iii) said alkaline catalyst comprises potassium hydroxide in vacuum glycerin start medium.

4. The stable, low-viscosity polymer polyol of Claim 1, wherein (a) said clear liquid base polyol has a mean hydroxyl functionality of 2.4 to 4.4, a number average molecular weight of 400 to 600, and an OH number of 300 to 400.

5. The stable, low-viscosity polymer polyol of Claim 1, wherein (a) (i) said initiator comprising at least one Zerewitinoff-active hydrogen atom is selected from the group consisting of a hydroxyl group containing compound, an amine group containing compound, mixtures thereof and alkxoylates thereof.

6. The stable, low-viscosity polymer polyol of Claim 1, wherein (a)(ii) said natural oil component comprises soybean oil.

7. The stable, low-viscosity polymer polyol of Claim 1, wherein (b) said ethylenically unsaturated monomer is selected from the group consisting of styrene, acrylonitrile and mixtures thereof.

8. The stable, low-viscosity polymer polyol of Claim 1, wherein (d) said free radical polymerization initiator is selected from the group consisting of peroxides, azo compounds and mixtures thereof.

9. A process for preparing a stable, low-viscosity polymer polyol comprising:

(1) free-radically polymerizing:

(a) a clear liquid base polyol component comprising a natural oil base polyol having a functionality of 1.7 to 5.0, a molecular weight of 350 to 725 and an OH number of 190 to 500, and which comprises the transesterification/alkoxylation product of

(i) at least one initiator comprising at least one Zerewitinoff active hydrogen atom;
(ii) a natural oil component or a mixture of natural oil components;
and
(iii) at least one alkylene oxide;
in the presence of
(iv) at least one basic catalyst;

wherein said alkylene oxide is completely reacted;
(b) at least one ethylenically unsaturated monomer;
and, optionally,
(c) a preformed stabilizer;

in the presence of:

(d) a free-radical polymerization initiator;
and, optionally,
(e) a chain transfer agent.

10. The process of Claim 9, wherein (a) (iv) said alkaline catalyst comprises one or more of the compounds potassium hydroxide, sodium hydroxide, sodium methoxide, potassium methoxide, sodium stearate, calcium oxide and N-methyl imidazole.

11. The process of Claim 9, wherein (a) (iv) said alkaline catalyst comprises potassium hydroxide in vacuum glycerin start medium.

12. The process of Claim 9, wherein (a) said clear liquid base polyol has a mean hydroxyl functionality of 2.4 to 4.4, a number average molecular weight of 400 to 600, and an OH number of 300 to 400.

13. The process of Claim 9, wherein (a) (i) said initiator comprising at least one Zerewitinoff-active hydrogen atom is selected from the group consisting of a hydroxyl group containing compound, an amine group containing compound, mixtures thereof and alkxoylates thereof.

14. The process of Claim 9, wherein (a)(ii) said natural oil component comprises soybean oil.

15. The process of Claim 9, wherein (b) said ethylenically unsaturated monomer is selected from the group consisting of styrene, acrylonitrile and mixtures thereof.


**Patentansprüche**

1. Stabiles, niederviskoses Polymerpolyol, umfassend das Reaktionsprodukt der radikalischen Polymerisation von:

(a) einer klaren flüssigen Basispolyolkomponente, umfassend ein auf Naturöl basierendes Basispolyol, das eine mittlere Hydroxylfunktionalität von 1,7 bis 5,0, ein zahlenmittleres Molekulargewicht von 350 bis 725 und eine OH-Zahl von 190 bis 500 aufweist und das Umesterungs-/Alkoxylierungsprodukt von

(i) mindestens einem Initiator mit mindestens einem Zerewitinoff-aktiven Wasserstoffatom;
(ii) einer Naturölkomponente oder einer Mischung von Naturölkomponenten und
(iii) mindestens einem Alkylenoxid

in Gegenwart von:

(iv) mindestens einem alkalischen Katalysator

umfasst, wobei das Alkylenoxid vollständig umgesetzt ist;
(b) mindestens einem ethylenisch ungesättigten Monomer;
und gegebenenfalls
(c) einem vorgebildeten Stabilisator;

in Gegenwart von:

(d) einem radikalischen Polymerisationsinitiator;
und gegebenenfalls
(e) einem Kettenübertragungsmittel.

2. Stabiles, niederviskoses Polymerpolyol nach Anspruch 1, wobei (a) (iv) der alkalische Katalysator eine oder mehrere der Verbindungen Kaliumhydroxid, Natriumhydroxid, Natriummethoxid, Kaliummethoxid, Natriumstearat, Calciumoxid und N-Methylimidazol umfasst.

3. Stabiles, niederviskoses Polymerpolyol nach Anspruch 1, wobei (a) (iii) der alkalische Katalysator Kaliumhydroxid in Vakuum-Glycerinstartmedium umfasst.

4. Stabiles, niederviskoses Polymerpolyol nach Anspruch 1, wobei (a) das klare flüssige Basispolyol eine mittlere Hydroxylfunktionalität von 2,4 bis 4,4, ein zahlenmittleres Molekulargewicht von 400 bis 600 und eine OH-Zahl von 300 bis 400 aufweist.

5. Stabiles, niederviskoses Polymerpolyol nach Anspruch 1, wobei (a) (i) der Initiator mit mindestens einem Zerewitinoff-aktiven Wasserstoffatom aus der Gruppe bestehend aus einer hydroxylgruppenhaltigen Verbindung, einer amingruppenhaltigen Verbindung, Mischungen davon und Alkoxylaten davon ausgewählt ist.

6. Stabiles, niederviskoses Polymerpolyol nach Anspruch 1, wobei (a) (ii) die Naturölkomponente Sojaöl umfasst.

7. Stabiles, niederviskoses Polymerpolyol nach Anspruch 1, wobei (b) das ethylenisch ungesättigte Monomer aus der Gruppe bestehend aus Styrol, Acrylnitril und Mischungen davon ausgewählt ist.

8. Stabiles, niederviskoses Polymerpolyol nach Anspruch 1, wobei (d) der radikalische Polymerisationsinitiator aus der Gruppe bestehend aus Peroxiden, Azoverbindungen und Mischungen davon ausgewählt ist.

9. Verfahren zur Herstellung eines stabilen, niederviskosen Polymerpolyols, das Folgendes umfasst:

   (1) radikalisches Polymerisieren von:

   (a) einer klaren flüssigen Basispolyolkomponente, umfassend ein auf Naturöl basierendes Basispolyol, das eine mittlere Hydroxylfunktionalität von 1,7 bis 5,0, ein zahlenmittleres Molekulargewicht von 350 bis 725 und eine OH-Zahl von 190 bis 500 aufweist und das Umesterungs-/Alkoxylierungsprodukt von

   (i) mindestens einem Initiator mit mindestens einem Zerewitinoff-aktiven Wasserstoffatom;
   (ii) einer Naturölkomponente oder einer Mischung von Naturölkomponenten und
   (iii) mindestens einem Alkylenoxid in Gegenwart von:
   (iv) mindestens einem alkalischen Katalysator

   umfasst, wobei das Alkylenoxid vollständig umgesetzt ist;
   (b) mindestens einem ethylenisch ungesättigten Monomer;
   und gegebenenfalls
   (c) einem vorgebildeten Stabilisator;

   in Gegenwart von:

   (d) einem radikalischen Polymerisationsinitiator;
   und gegebenenfalls
   (e) einem Kettenübertragungsmittel.

10. Verfahren nach Anspruch 9, wobei (a) (iv) der alkalische Katalysator eine oder mehrere der Verbindungen Kaliumhydroxid, Natriumhydroxid, Natriummethoxid, Kaliummethoxid, Natriumstearat, Calciumoxid und N-Methylimidazol umfasst.

11. Verfahren nach Anspruch 9, wobei (a) (iv) der alkalische Katalysator Kaliumhydroxid in Vakuum-Glycerinstartmedium umfasst.

12. Verfahren nach Anspruch 9, wobei (a) das klare flüssige Basispolyol eine mittlere Hydroxylfunktionalität von 2,4 bis 4,4, ein zahlenmittleres Molekulargewicht von 400 bis 600 und eine OH-Zahl von 300 bis 400 aufweist.

13. Verfahren nach Anspruch 9, wobei (a) (i) der Initiator mit mindestens einem Zerewitinoff-aktiven Wasserstoffatom aus der Gruppe bestehend aus einer hydroxylgruppenhaltigen Verbindung, einer amingruppenhaltigen Verbindung, Mischungen davon und Alkoxylaten davon ausgewählt wird.

14. Verfahren nach Anspruch 9, wobei (a) (ii) die Naturölkomponente Sojaöl umfasst.

15. Verfahren nach Anspruch 9, wobei (b) das ethylenisch ungesättigte Monomer aus der Gruppe bestehend aus Styrol, Acrylnitril und Mischungen davon ausgewählt wird.

**Revendications**

1. Polyol polymère stable, à faible viscosité comprenant le produit de polymérisation radicalaire de :

(a) un composant polyol de base liquide transparent comprenant un polyol de base d'huile naturelle ayant une fonctionnalité hydroxyle moyenne de 1,7 à 5,0, un poids moléculaire moyen en nombre de 350 à 725 et un indice OH de 190 à 500, et qui comprend le produit de transestérification / alcoxylation de

(i) au moins un initiateur comprenant au moins un atome d'hydrogène actif de Zerewitinoff ;
(ii) un composant d'huile naturelle ou un mélange de composants d'huile naturelle ; et
(iii) au moins un oxyde d'alkylène ;

en présence de :

(iv) au moins un catalyseur alcalin ;

dans lequel ledit oxyde d'alkylène réagit complètement ;
(b) au moins un monomère éthyléniquement insaturé ;
et, facultativement,
(c) un stabilisant préformé ;

en présence de :

(d) un initiateur de polymérisation radicalaire ;
et, facultativement,
(e) un agent de transfert de chaîne.

2. Polyol polymère stable, à faible viscosité selon la revendication 1, dans lequel, dans (a) (iv), ledit catalyseur alcalin comprend un ou plusieurs des composés hydroxyde de potassium, hydroxyde de sodium, méthoxyde de sodium, méthoxyde de potassium, stéarate de sodium, oxyde de calcium et N-méthyl-imidazole.

3. Polyol polymère stable, à faible viscosité selon la revendication 1, dans lequel, dans (a) (iii), ledit catalyseur alcalin comprend de l'hydroxyde de potassium dans un milieu de départ de glycérine sous vide.

4. Polyol polymère stable, à faible viscosité selon la revendication 1, dans lequel, dans (a), ledit polyol de base liquide transparent a une fonctionnalité hydroxyle moyenne de 2,4 à 4,4, un poids moléculaire moyen en nombre de 400 à 600, et un indice OH de 300 à 400.

5. Polyol polymère stable, à faible viscosité selon la revendication 1, dans lequel, dans (a) (i), ledit initiateur comprenant au moins un atome d'hydrogène actif de Zerewitinoff est choisi dans le groupe constitué d'un composé contenant un groupe hydroxyle, d'un composé contenant un groupe amine, de mélanges de ceux-ci et d'alcoxylates de ceux-ci.

6. Polyol polymère stable, à faible viscosité selon la revendication 1, dans lequel, dans (a) (ii), ledit composant d'huile naturelle comprend de l'huile de soja.

7. Polyol polymère stable, à faible viscosité selon la revendication 1, dans lequel, dans (b), ledit monomère éthyléniquement insaturé est choisi dans le groupe constitué du styrène, de l'acrylonitrile et de mélanges de ceux-ci.

8. Polyol polymère stable, à faible viscosité selon la revendication 1, dans lequel, dans (d), ledit initiateur de polymérisation radicalaire est choisi dans le groupe constitué de peroxydes, de composés azoïques et de mélanges de ceux-ci.

9. Procédé de préparation d'un polyol polymère stable, à faible viscosité comprenant :

(1) la polymérisation radicalaire de :

(a) un composant polyol de base liquide transparent comprenant un polyol de base d'huile naturelle ayant une fonctionnalité de 1,7 à 5,0, un poids moléculaire de 350 à 725 et un indice OH de 190 à 500, et qui comprend le produit de transestérification / alcoxylation de

(i) au moins un initiateur comprenant au moins un atome d'hydrogène actif de Zerewitinoff ;

(ii) un composant d'huile naturelle ou un mélange de composants d'huile naturelle ; et

(iii) au moins un oxyde d'alkylène ;

en présence de

(iv) au moins un catalyseur basique ;

dans lequel ledit oxyde d'alkylène réagit complètement ;

(b) au moins un monomère éthyléniquement insaturé ;

et, facultativement,

(c) un stabilisant préformé ;

en présence de :

(d) un initiateur de polymérisation radicalaire ;

et, facultativement,

(e) un agent de transfert de chaîne.

10. Procédé selon la revendication 9, dans lequel, dans (a) (iv), ledit catalyseur alcalin comprend un ou plusieurs des composés hydroxyde de potassium, hydroxyde de sodium, méthoxyde de sodium, méthoxyde de potassium, stéarate de sodium, oxyde de calcium et N-méthyl-imidazole.

11. Procédé selon la revendication 9, dans lequel, dans (a) (iv), ledit catalyseur alcalin comprend de l'hydroxyde de potassium dans un milieu de départ de glycérine sous vide.

12. Procédé selon la revendication 9, dans lequel, dans (a), ledit polyol de base liquide transparent a une fonctionnalité hydroxyle moyenne de 2,4 à 4,4, un poids moléculaire moyen en nombre de 400 à 600, et un indice OH de 300 à 400.

13. Procédé selon la revendication 9, dans lequel, dans (a) (i), ledit initiateur comprenant au moins un atome d'hydrogène actif de Zerewitinoff est choisi dans le groupe constitué d'un composé contenant un groupe hydroxyle, d'un composé contenant un groupe amine, de mélanges de ceux-ci et d'alcoxylates de ceux-ci.

14. Procédé selon la revendication 9, dans lequel, dans (a) (ii), ledit composant d'huile naturelle comprend de l'huile de soja.

15. Procédé selon la revendication 9, dans lequel, dans (b), ledit monomère éthyléniquement insaturé est choisi dans le groupe constitué du styrène, de l'acrylonitrile et de mélanges de ceux-ci.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5288884 A
- US 5298637 A
- EP 619291 A1
- US 20020058774 A1
- DE 3323880 A
- WO 200420497 A
- DE 10138132
- US 6686435 B
- US 6548609 B
- US 6107433 A
- US 2752376 A
- EP 259722 A
- DE 3630264 A
- WO 9105759 A
- WO 200496744 A
- WO 200496882 A
- WO 2004096883 A
- US 6359022 B
- EP 905158 A
- EP 610714 A
- WO 200640333 A
- WO 200640335 A
- DE 19812174 A
- US 20080114086 A
- US 5854358 A
- WO 2006065345 A
- US 20100160469 A
- US 7456229 B
- US 201200411441 A1
- US 6710096 B
- WO 2003106535 A
- WO 200110880 A
- DE 3401780 A
- US 4148840 A, Shah
- US 5196476 A, Simroth
- US 5364906 A, Critchfield
- US 5990185 A, Fogg
- US 6013731 A, Holeschovsky
- US 6455603 B, Fogg
- US 7179882 B, Adkins
- US 3953393 A
- US 4119586 A
- US 4463107 A
- US 5324774 A
- US 5814699 A
- US 6624209 B
- US 3401190 A
- GB 878430 A
- GB 848671 A
- US 3492330 A
- US 3454606 A
- US 3227138 A
- US 3152162 A
- US 3394164 A
- US 3644457 A
- GB 994890 A
- BE 761616
- NL 7102524
- US 3002973 A
- DE 1022789
- DE 1222067
- DE 1027394
- DE 1919034
- DE 2004048
- DE 1230778
- DE 1101394
- US 3124605 A
- US 3201372 A
- GB 889050 A
- US 3654106 A
- GB 965474 A
- GB 1072956 A
- US 3567763 A
- DE 1231688
- DE 1072385
- US 3455883 A
- DE 2624527 A
- DE 2624528 A
- US 2834748 A
- US 2917480 A
- US 3629308 A

**Non-patent literature cited in the description**

- **DESROCHES et al.** From Vegetable Oils to Polyurethanes: Synthetic Routes to Polyols and Main Industrial Products. *Polymer Reviews,* 2012, vol. 52, 38-79
- **PFISTER et al.** Recent Advances in Vegetable Oil based Polyurethanes. *ChemSusChem,* 2011, vol. 4, 703-717

- **OSIPOW et al.** Methods of Preparation ... Fatty Acid Esters of Sucrose. *Ind. Eng. Chem.,* 1956, vol. 48 (9), 1459-1462
- **OSIPOW et al.** Surface Activity of Monoesters ... Fatty Acid Esters of Sucrose. *Ind. Eng. Chem.,* 1956, vol. 48 (9), 1462-1464
- **BERNE-ALLEN.** Tallow Derived Surfactants: Superior Adjuvants for Agricultural Sprays. *Fette-Seifen-Anstrichmittel,* 1965, vol. 67 (7), 509-511
- **M. LONESCU et al.** *Advances in Urethanes Science and Technology,* 1998, vol. 14, 151-218
- **W. SIEFKEN.** *Justus Liebigs Annalen der Chemie,* vol. 562, 75-136
- **KOHLER.** *Journal of the American Chemical Society,* 1927, vol. 49, 3181
- Kunststoff-Handbuch. Carl Hanser Verlag, 1993, vol. VII, 104-127